# EUROPEAN PATENT SPECIFICATION

(11) **EP 3 300 574 B1**
(45) Date of publication and mention of the grant of the patent: **22.04.2020**
(21) Application number: 17189671.5
(22) Date of filing: 17.09.2014
(51) Int. Cl.: A01D 34/81

(54) **MOWER UNIT**
RASENMÄHER
TONDEUSE

(30) Priority: 27.09.2013 JP 2013202704; 11.11.2013 JP 2013233297; 21.02.2014 JP 2014031835
(43) Date of publication of application: 04.04.2018
(62) Divisional of application: 14185116.2
(73) Proprietor: Kubota Corporation, Osaka 556-8601 (JP)
(72) Inventor: KOIKE, Kazuo, Sakai-shi, Osaka 590-0823 (JP); ITO, Hirokazu, Sakai-shi, Osaka 590-0823 (JP); NISHIHARA, Hironobu, Sakai-shi, Osaka 590-0823 (JP); YAMASHITA, Nobuyuki, Sakai-shi, Osaka 590-0823 (JP); AKAI, Yuto, Sakai-shi, Osaka 590-0823 (JP); AKITA, Masayuki, Sakai-shi, Osaka 590-0823 (JP); IZUMI, Masahiro, Sakai-shi, Osaka 590-0823 (JP); NAGAI, Hiroki, Sakai-shi, Osaka 590-0823 (JP); KANAI, Toshiki, Sakai-shi, Osaka 590-0823 (JP); FUJII, Takashi, Sakai-shi, Osaka 590-0823 (JP); MATSUMOTO, Ryo, Sakai-shi, Osaka 590-0823 (JP)
(74) Representative: von Hirschhausen, Helge

(56) References cited:
- EP-A2- 0 821 868
- DE-A1- 3 232 895
- FR-A1- 2 940 880
- US-A- 4 087 955
- US-A1- 2008 072 561

## Description

### BACKGROUND

### 1. Field of the invention

The present invention relates to a mower unit including a blade housing and a blade unit therein, the blade unit having a blade that rotates about an axis extending in a vertical direction.

The present invention also relates to a fastening structure for fastening a cover member for covering a rolling body to a covered member.

### 2. Description of the Related Art

The mower unit of the above-mentioned type is often used in combination with a grass-collecting container for storing mown grass sent from the mower unit through a conveyance duct. In order to smoothly transfer mown grass from the mower unit to the grass-collecting container, it is necessary to supply conveying air in a satisfactory amount. This conveying air is supplied by an air flow generated by blowing wings provided on a blade and/or an air flow generated by an additional fan unit. Basically, air (ambient air) as a source of such an air flow comes in from a gap between a blade unit and the ground. Accordingly, especially at a place where grass or weed is densely grown, the volume of the conveying air may become insufficient.

A mower has been known from JP2010-161972A in which a plurality of air intake ports are formed in a top panel of a blade housing, in order to increase conveying air. In this mower, grass mown by each of two blades arranged side by side is sent by the conveying air generated by each blade. A first supply source of air to become the conveying air is ambient air taken in from a gap between the blade housing and the ground, and a second supply source is ambient air taken in from the air intake ports (holes) provided in the blade housing. Therefore, the conveying air generated using the ambient air taken in from the first and second supply sources, together with the mown grass, is discharged from a mown grass discharge port formed by cutting out a portion of the top panel of the blade housing and flows through a discharge cover into a conveyance duct connected to a subsequent grass-collecting container. In this conventional structure, a region of the air intake ports as the second supply source provided on the top panel of the blade housing is exposed to outside, and thus a problem arises that the ambient air cannot be sufficiently taken in if the mown grass is accumulated in this region.

A lawn mower has been known from JP2009-50222A in which a fan is provided on a blade shaft in a space defined between a top panel of a blade housing and a blade, in order to increase the volume of the conveying air. This fan includes a fan rotor and a fan case, and is arranged coaxially with the blade inside the blade housing. The top panel has an intake opening for the fan to suck air, and through this intake opening, a straight flow of air is created between outside and the fan. To an edge region of the intake opening formed in the blade housing, a cylindrical fan case surrounding an outer periphery of the fan rotor is attached. With this configuration, the ambient air sucked in from the intake opening is blown out from an air outlet formed in a bottom part of the cylinder, to thereby increase the volume of the conveying air. However, with this conventional structure, the fan rotor communicates with outside through the intake opening in a direct linear manner without obstruction, and thus a problem arises that foreign matters from outside easily enter a region of the fan rotor and further to a region of the blade. EP 0 821 868 A2 also discloses a lawn mower.

In addition, since the above-mentioned blade housing is designed to send a flow of wind generated by the rotation of the blade while effectively collecting the flows, the mowing space has a configuration in which a portion of the blade housing above an outer region of rotation locus of the blade is made higher. As a result, an upper face of the blade housing has a recess, and a problem arises that mown grass is accumulated in this recess. In this situation, a mower has been known from JP2010-161972A in which only a plurality of the air intake ports are formed in the top panel of the blade housing, in order to increase the total volume of the conveying air. In this mower, the grass mown by each of two blades arranged side by side is sent by the conveying air generated by each blade. The supply source of this conveying air is ambient air taken in from the gap between the blade housing and the ground, as well as the air intake ports. The flows of the conveying air generated by the blades are joined in an region of overlapping rotational loci of the two blades, and the joined conveying air is discharged from the mown grass discharge port formed by cutting out a portion of the top panel of the blade housing, and flows through the discharge cover into the conveyance duct connected to the subsequent grass-collecting container. With this structure, the ambient air as the source of the conveying air can be supplied from the air intake ports, but the volume of the air in the conveying air flow path from the discharge cover to the conveyance duct may become insufficient, since no special measure is taken to increase the volume of the conveying air at the time when the flows are joined and after the flows are joined.

A conventional fastening structure is described in, for example, JP2001-251924A (Fig. 13 and paragraph [0028]). In the fastening structure described in JP2001-251924A, a cover member (belt cover 63 in JP2001-251924A) for covering a rolling body (pulley 59 and the like in JP2001-251924A) and a covered member (mower deck 5 in JP2001-251924A) are fixed by fastening a male screw member (bolt in JP2001-251924A) and a female screw member (not shown).

### SUMMARY OF THE INVENTION

In view of the above, in the mower unit in which the mown grass is sent by the conveying air, there has been a demand for solving the above-mentioned problems in the conventional structures for supplying ambient air to the flow of the conveying air.

In addition, in view of the above, there has been a demand for a mower unit in which the volume of the conveying air generated by the blade unit, in particular the conveying air in a conveying air flow path from the discharge cover to the conveyance duct, is increased and the mown grass in this region is smoothly transferred.

Further, the conventional fastening structure has a configuration in which the male screw member is completely detached from the cover member covering the rolling body and the covered member, when the fastening of the male screw member and the female screw member is released. Accordingly, when the cover member for covering the rolling body and the covered member are removed from each other, the male screw member may be lost. In view of this, there has been a demand for a fastening structure that can suitably prevent the loss of the male screw member, when the cover member for covering the rolling body and the covered member are removed from each other.

The mower unit according to the present invention includes: a blade unit including: a rotary shaft having a rotary axis extending in a vertical direction; and a blade which is provided on the rotary shaft and rotatable about the rotary axis; a blade housing that covers the blade unit from above to create a mowing space therein and is provided outside thereof with a recess spreading radially from the rotary shaft; a deck lid that covers the recess from above to create an intermediate space; a primary air flowing part that allows air to flow between outside and the intermediate space; and a secondary air flowing part that allows air to flow between the intermediate space and the mowing space.

With this configuration, the recess formed in the top panel is covered with the deck lid from above, and an advantage can be obtained that the mown grass is prevented from being accumulated in the recess and the mown grass once landed on the deck lid is likely to fall off therefrom. In addition, the following advantage can be obtained. Through the intermediate space created by covering the recess formed in the top panel with the deck lid from above, ambient air flows into the mowing space created in the blade housing. Specifically, ambient air flows through the primary air flowing part into the intermediate space, and further flows from the intermediate space through the secondary air flowing part into the mowing space where the blade is rotating. Accordingly, even when foreign matters from outside, such as pebbles and sand, enter the primary air flowing part, they are retained once in the primary air flowing part, and thus it is unlikely that they directly enter the mowing space. Conversely, it is unlikely that foreign matters, such as grass and stone, thrown out from the mowing space are blown out directly to the external environment through the primary air flowing part. In addition, the intermediate space functions as a buffer between the external environment and the mowing space, and thus the degree of freedom in size and position of the primary air flowing part and the secondary air flowing part is increased, and the structure for supplying ambient air to the mowing space can be optimized. For example, the primary air flowing part may be disposed near the blade rotary axis and the secondary air flowing part may be disposed away from the blade rotary axis; or alternatively, the primary air flowing part may be disposed away from the blade rotary axis and the secondary air flowing part may be disposed near the blade rotary axis.

The recess that forms the intermediate space by cooperating with the deck lid relies on an upper structure of the blade housing. In one aspect of the present invention related to this upper structure, the blade housing includes: an inner top panel extending radially from the rotary axis; a step plate extending upward from an outer edge of the inner top panel; an outer top panel extending radially from an upper edge of the step plate; and a side plate extending downward from an outer edge of the outer top panel, and the intermediate space is defined by the inner top panel, the step plate and the deck lid. When this blade housing structure is studied from the viewpoint of the mowing space, an annular space protruding upward is formed by the step plate, the outer top panel and the side plate, which space is convenient for the wind as the conveying air generated by the blade to flow while collecting mown grass. In other words, the structure of the inner top panel and the step plate provides, on an outer side, a recess for the intermediate space and, on an inner side, a conveyance space for the conveying air to flow while collecting mown grass. In addition, the recess is covered by the deck lid from above, and thus a problem is eliminated that the mown grass or the like accumulated in the recess falls off from the blade housing by some impact during traveling, and consequently leaves traces of undesirable appearance.

If it is impossible to prevent the mown grass or the like from being accumulated on the upper face of blade housing, at least the phenomenon should be avoided that a large amount of the mown grass accumulated on the blade housing falls off at a time. For this purpose, it is effective that the upper face of the blade housing has a shape, such as a flat shape, that is unlikely to retain mown grass and the like. In addition, it is preferable that the flat face has a certain tilt. Accordingly, in one preferred aspect of the present invention, an upper face of the deck lid and an upper face of the outer top panel are formed and arranged to create a single flat face.

In a case of the mower in which the grass mown in the blade housing is collected in a grass-collecting container mounted to a rear portion of the mower, when the conveying air generated by the blowing wings on the blade is not sufficient, it is necessary to introduce a fan unit that generates additional conveying air. Accordingly, in one preferred aspect of the present invention, the mower unit further comprises above the blade a fan unit having a fan rotatable about the rotary axis. With such a fan unit, wind generated by the fan is further sent to the blade, and strong conveying air can be generated by synergy with the wind-generating function of the blade. For this purpose, it is preferable that the secondary air flowing part for supplying air in the intermediate space to the fan is positioned within a rotation locus of the fan when seen from above.

As one specific example of the formation of the secondary air flowing part within the rotation locus of the fan, it is first considered to form a through-hole in the secondary inner top panel so as to provide the air flowing part. With this through-hole, air can be supplied from above to a suitable position within the rotation locus of the fan. However, when a hole having a large flow cross section is formed in the inner top panel, the strength of the inner top panel is lowered. Therefore, in the case of the mower unit in which a flange part of a bearing case receiving the rotary shaft penetrates the blade housing and is installed in the blade housing, when the increase in the flow cross section of the secondary air flowing part is desired, it is possible to use a flow passage formed of a gap between the flange part and the blade housing as the secondary air flowing part. Such a flow passage is advantageous in that the flow cross section of the secondary air flowing part can be increased without lowering the strength of the inner top panel.

It is necessary to provide a structure which prevents water droplet from entering a bearing of the blade rotary shaft, and a labyrinth structure has been known to provide a preferable waterproof structure. In the configuration in which the fan unit is attached to the blade rotary shaft, it is advantageous in terms of space if a part of this labyrinth structure is formed by the component of the fan unit. Accordingly, in one preferred aspect of the present invention, a labyrinth structure extending in a circumferential direction around the rotary axis is formed between the fan unit and a flange part of a bearing case receiving the rotary shaft.

In order to efficiently perform the air blow by the fan unit, the principle of centrifugal pump can be utilized. In order to realize this, in a preferred embodiment of the fan unit according to the present invention, the fan unit is provided with a fan shroud including: a bottom wall positioned between the fan and the blade; and a side wall standing from an outer edge of the bottom wall, the side wall has a blowoff port, the bottom wall has a through-hole for the rotary shaft, and an outer peripheral end of the bottom wall extends in a spiral shape having a center thereof coinciding with the rotary axis, and the blowoff part is formed as a cutout in the side wall at a position corresponding to the position where a flow cross section of an air flow space inside the fan shroud becomes largest. In this configuration, it is necessary to provide a side wall having a shape matching a non-circular (spiral-shaped) outer edge of the bottom wall. For this purpose, the side wall having the desired shape can be produced by, first preparing the bottom wall, and then processing to bend a plate so as to correspond to an outer edge of the side wall. By joining the side wall and the bottom wall, a fan shroud having a non-circular cross section can be obtained.

Accordingly, in one preferred aspect of the present invention, the mower unit further comprises a mown grass discharge cover having a mown grass discharging-conveying flow path formed therein, which path communicates with the mowing space and discharges mown grass from the mowing space, and the mown grass discharge cover extends from a mown grass discharge port formed in the blade housing, continues above the blade housing to an area of a front end of the blade housing, and an ambient air vent port communicating with the mown grass discharge port is formed between a front end of the mown grass discharge cover and the blade housing. With this configuration, the ambient air vent port is oriented to the mown grass discharge port where the conveying air generated inside the blade housing is discharged from the blade housing after accelerated, and thus ambient air can be effectively taken in. In particular, such a positioning of the ambient air vent port is convenient in the case of a multiple-blade type blade housing having a plurality of blades, since the mown grass discharge port is formed at a position where the flows of the conveying air generated by the blades are joined, and the conveying air flows at a high speed in the vicinity of the mown grass discharge port.

In order to effectively utilize a large suction power on ambient air imparted by the conveying air having a large velocity component, it is necessary that a flow cross section of the air-intake path is large to some extent, but a large flow cross section also may increase the possibility of allowing stones or lumps of soil to be discharged from inside to outside or taken in from outside to inside through the ambient air vent port. Accordingly, in one preferred aspect of the present invention, the ambient air vent port has a slit-shaped flow cross section which is narrower in the vertical direction and extends over the entire width of the mown grass discharge cover, to thereby prevent large foreign matters from being discharged and being taken in.

When the mown grass transfer is clogged, the mown grass is thrown out from the ambient air vent port and accumulated on the top panel of the blade housing. In order to avoid this situation, the front end of the mown grass discharge cover (64) extends to the front end of a top panel (70) of the blade housing (7), and at the same time, the ambient air vent port (90) is provided with a deflector (64C) that alters a direction of air suction and blowoff at the ambient air vent port (90) to upward and downward, respectively. This is convenient since all the mown grass thrown out from the ambient air vent port is scattered to outside the blade housing.

The mower unit according to the present invention includes: the blade unit including: a first blade which is rotatable about a first axis extending in a vertical direction and has a function to generate wind by rotation thereof; and a second blade which is rotatable about a second axis extending in the vertical direction and has a function to generate wind by rotation thereof; the first blade and the second blade being arranged in parallel in a horizontal direction; a blade housing having a mowing space that accommodates the blade unit therein, the mowing space being defined by: a top panel in which a mown grass discharge port for discharging grass mown by the blade unit is formed between a plane extending in a front-rear direction including the first axis and a plane extending in the front-rear direction including the second axis; and a side plate extending downward from the top panel; a discharge cover which surrounds an opening edge of the mown grass discharge port and has a discharging-conveying flow path formed therein, which path communicates with the mowing space through the mown grass discharge port; and at least one intake part having an ambient air intake opening which is opened to a mown grass discharge space formed of a mown grass pre-discharge region and a mown grass post-discharge region, the mown grass pre-discharge region being an upper region in the mowing space above a mowing plane defined by rotation loci of the first blade and the second blade and at the same time between the plane extending in the front-rear direction including the first axis and the plane extending in the front-rear direction including the second axis, and the mown grass post-discharge region being a region in the discharging-conveying flow path in the vicinity of the mown grass discharge port.

With this configuration, the ambient air is supplied from the ambient air intake opening which is opened to the mown grass pre-discharge region and/or the mown grass post-discharge region, the mown grass pre-discharge region being a region where the flow of the conveying air generated by the rotation of the first blade and the flow of the conveying air generated by the rotation of the second blade begin to be joined, and the mown grass post-discharge region being a region where the joining of the flows of the conveying air that have passed through the mown grass discharge port while being joined is completed. With this configuration, the volume of the conveying air either at the time when the flows are joined or after the flows are joined is increased, and in the conveying air flow path from the discharge cover to the conveyance duct, mown grass is smoothly transferred.

Since the conveying air flows at a high speed when passing the mown grass discharge port, the conveying air has a large suction power on ambient air. Accordingly, in one preferred aspect of the present invention, the intake parts has the ambient air intake opening which is a gap between a front portion of the opening edge of the mown grass discharge port and a base end portion of the discharge cover and/or a base end opening provided in the base end portion of the discharge cover, and with this configuration, higher efficiency is obtained in suction of ambient air at the ambient air intake opening.

Since the ambient air intake opening allows a communication between outside and inside of the mower unit, foreign matters, such as pebbles, may be discharged from inside to outside or taken in from outside to inside through the ambient air intake opening. In order to prevent this as much as possible while sufficiently securing the flow area of the ambient air intake opening, it is preferred that the ambient air intake opening has a slit-shaped flow cross section which is narrower in the vertical direction and extends over the entire width of the mown grass discharge port.

For increasing the volume of the conveying air that has passed the mown grass discharge port, it is preferable to utilize the ambient air intake opening which is a through-hole provided in a central portion in the front-rear direction of the discharge cover. In addition, for increasing the volume during the joining of the flow of the conveying air generated by the first blade and the flow of the conveying air generated by the second blade, it is preferable to utilize an ambient air intake opening which is a through-hole provided in a portion of the side plate facing the mown grass pre-discharge region. The latter through-hole as the ambient air intake opening is formed in the portion of the side plate close to the ground, and thus a possibility of intrusion of foreign matters from outside becomes higher. In order to prevent such intrusion of foreign matters as much as possible, it is convenient if an eaves member is provided that allows air to flow while covering the through-hole.

In a case of the mowing work on a place where grass is densely grown, the volume of the conveying air may not be sufficient if the conveying air is taken in only from the gap between the lower end of the blade housing and the ground. Accordingly, it is preferable that the blade housing is provided with an auxiliary intake part having an auxiliary intake opening that is opened to the mowing space.

As described above, the intake part having the exhaust-intake opening that is opened to the mown grass discharge space formed of the mown grass pre-discharge region and the mown grass post-discharge region is effective for increasing the volume of the conveying air. Such an intake part is also effective to the single blade type mower unit having a single blade. In the case of the blade housing of this type of the mower unit, no confluent region is present because of the single blade, but it is still possible to define the mown grass discharge space formed of the mown grass pre-discharge region and the mown grass post-discharge region, and the intake part having the exhaust-intake opening that is opened to the mown grass discharge space is effective for increasing the volume of the conveying air, even in the case of the mower unit of the single blade type. Such a single blade type mower unit according to the present invention includes: a blade unit including a blade which is rotatable about an axis extending in a vertical direction and has a function to generate wind by rotation thereof; a blade housing having a mowing space that accommodates the blade unit therein, the mowing space being defined by a top panel in which a mown grass discharge port for discharging grass mown by the blade unit is formed and a side plate extending downward from the top panel; a discharge cover which surrounds an opening edge of the mown grass discharge port and has a mown grass discharging-conveying flow path formed therein, which path communicates with the mowing space through the mown grass discharge port; at least one intake part having an ambient air intake opening which is opened to a mown grass discharge space formed of a mown grass pre-discharge region and a mown grass post-discharge region, the mown grass pre-discharge region being an upper region in the mowing space above a mowing plane defined by a rotation locus of the blade, and the mown grass post-discharge region being a region in the discharging-conveying flow path in the vicinity of mown grass discharge port. The intake part in this mower unit can also exert an effect substantially the same as the effect of the intake part in the mower unit having the above-mentioned plurality of blades arranged side by side.

The mower unit according to the present invention includes: a fastening structure for fastening a first member and a second member, the first member being one of a cover member for covering a rolling body and a covered member, the second member being the other of the cover member and the covered member, the fastening structure including: a retaining member; a male screw member rotatably held at one end portion of the retaining member; a first insertion part which is formed in the first member and into which the male screw member is inserted; a female screw member which is provided on the second member and is fastenable to the male screw member; a through part formed in the first member or the retaining member; and a first slip-off prevention part which cannot pass the through part and prevents the retaining member from being detached from the first member or the second member, wherein the retaining member is slidable in an axial direction of the male screw member by utilizing the through part.

According to the present invention, the first member and the second member, the first member being one of a cover member for covering a rolling body and a covered member, the second member being the other of the cover member and the covered member, can be fixed by fastening the male screw member and the female screw member, and can be removed from each other by releasing the fastening of the male screw member and the female screw member.

When the first member and the second member are to be fixed, the male screw member rotatably held at one end portion of the retaining member is inserted into the first insertion part formed in the first member, and the male screw member is screwed forward in the axial direction into the female screw member provided on the second member, to thereby fasten the male screw member and the female screw member. At this time, the retaining member holding the male screw member in a rotatable manner is slidable in the axial direction of the male screw member by utilizing the through part formed in either the first member or the retaining member, and thus the male screw member is screwed forward while being guided in the axial direction, to thereby suitably perform fastening of the male screw member and the female screw member.

On the other hand, when the first member and the second member are to be removed from each other, the male screw member is screwed backward in the axial direction from the female screw member, to thereby release the fastening of the male screw member and the female screw member. The retaining member holding the male screw member in a rotatable manner is slidable in the axial direction of the male screw member by utilizing the through part formed in either the first member or the retaining member, and thus the male screw member is screwed backward while being guided in the axial direction, to thereby suitably release the fastening of the male screw member and the female screw member.

When the first member and the second member are removed from each other, since the first slip-off prevention part cannot pass the through part, the retaining member is prevented from being detached from either the first member or the second member. Accordingly, when the first member and the second member are removed from each other, the male screw member rotatably held at one end portion of the retaining member is prevented from being detached from the first member or the second member.

As described above, the present invention can suitably prevent the male screw member from being lost, when the cover member for covering the rolling body and the covered member are removed from each other.

In the present invention, it is preferable that the through part is formed in the first member, the retaining member penetrates the through part, and the first slip-off prevention part is provided in the other end portion of the retaining member positioned on the side opposite to the one end portion of the retaining member, relative to the through part.

According to the above-mentioned arrangement, the retaining member penetrates the through part formed in the first member. The first slip-off prevention part is provided at the other end portion of the retaining member positioned on the side opposite to the one end portion of the retaining member holding the male screw member in a rotatable manner. With this arrangement, when the fastening of the male screw member and the female screw member is released, since the first slip-off prevention part provided in the other end portion of the retaining member cannot pass the through part formed in the first member, the retaining member is prevented from being detached from the first member. Therefore, the male screw member rotatably held at one end portion of the retaining member is prevented from being detached from the first member.

Moreover, the other end portion of the retaining member where the first slip-off prevention part is provided is positioned on the side opposite to the one end portion of the retaining member where the male screw member is rotatably held, relative to the first member. Therefore, for example, when one end portion of the retaining member that holds the male screw member is positioned on an outer side of the first member, and the other end portion of the retaining member on which the first slip-off prevention part is provided is positioned on an inner side of the first member, a portion of the retaining member and the first slip-off prevention member are hidden on the inner side of the first member, and thus an outer appearance can be made excellent.

In the present invention, it is preferable that the retaining member includes: a first bent portion which is bent relative to one end portion of the retaining member; a slide part which extends at one end thereof from the first bent portion and is slidable in the through part; a second bent portion which is bent relative to the slide part at the other end of the slide part; and an extension part extending from the second bent portion, and that the first slip-off prevention part is provided in the extension part.

According to the above-mentioned arrangement, the slide part extending through the first bent portion from one end portion of the retaining member that holds the male screw member in a rotatable manner is slidable in the through part formed in the first member. When the fastening of the male screw member and the female screw member is to be released, by screwing backward the male screw member and sliding the slide part in the through part, the portion of the extension part extending from the slide part through the second bent portion is brought into contact with the first member. Accordingly, the portion on the extension part of the retaining member prevents the retaining member from being detached from the through part of the first member.

In the present invention, it is preferable that the second bent portion is bent in such a manner that the extension part extends away from one end portion of the retaining member.

According to the above-mentioned arrangement, when the fastening of the male screw member and the female screw member is released, by moving, to the vicinity of the through part formed in the first member, the extension part of the retaining member extending away from one end portion of retaining member, and by tilting the retaining member away from the first insertion part formed in the first member, the slide part of the retaining member can be retained by the first member. With this arrangement, the fastened male screw member and the released male screw member become clearly distinguishable from each other by their appearances, and thus attachment/detachment between the cover member and the covered member can be performed smoothly.

In the present invention, it is preferable that the retaining member has the through part, the second member is provided with a guide member whose one end portion is supported by the second member, the guide member penetrates the through part, and the first slip-off prevention part is provided on the other end portion of the guide member positioned on the side opposite to the second member relative to the through part.

According to the above-mentioned arrangement, the guide member whose one end portion is supported by the second member penetrates the through part formed in the retaining member. The first slip-off prevention part is provided on the other end portion of the guide member positioned on the side opposite to the second member relative to the through part. With this arrangement, when the fastening of the male screw member and the female screw member is released, since the first slip-off prevention part provided in the other end portion of the guide member whose one end portion is supported by the second member cannot pass the through part formed in the retaining member, the retaining member is prevented from being detached from the second member. Therefore, the male screw member rotatably held at one end portion of the retaining member is prevented from being detached from the second member.

In the present invention, it is preferable that the retaining member and the first slip-off prevention part are rigid bodies.

According to the above-mentioned arrangement, the retaining member and the first slip-off prevention part are rigid bodies which are unlikely to be deformed, and thus the first slip-off prevention part can suitably prevent the retaining member from being detached.

In the present invention, it is preferable that the retaining member is formed of a flat plate.

According to the above-mentioned arrangement, the retaining member that holds the male screw member in a rotatable manner can be formed of a flat plate processed to be bent, and thus the retaining member can be made simple and production cost can be saved.

In the present invention, it is preferable that the male screw member is provided with a head and a male screw shaft part extending from the head, the retaining member is provided with a second insertion part into which the male screw shaft part is inserted, and the second slip-off prevention part having a larger dimension than that of the second insertion part is provided on a portion of the male screw shaft part on the side opposite to the head relative to the second insertion part.

According to the above-mentioned arrangement, the male screw shaft part of the male screw member is inserted into the second insertion part of the retaining member, and the second slip-off prevention part having a larger dimension than that of the second insertion part is provided on a portion of the male screw shaft part on the side opposite to the head relative to the second insertion par. With this configuration, the portion of the male screw shaft part positioned between the head of the male screw member and the second slip-off prevention part can be rotatably held at the second insertion part of the retaining member.

In the present invention, it is preferable that a dimension of the first slip-off prevention part is made larger than a dimension of the through part.

According to the above-mentioned arrangement, since the dimension of the first slip-off prevention part is larger than that of the through part, the first slip-off prevention part can be suitably prevented from passing the through part.

### BRIEF DESCRIPTION OF THE DRAWINGS

- Fig. 1: is a perspective view of a mower unit for illustrating a basic concept of a first embodiment of the present invention.
- Fig. 2: is a perspective view of the mower unit of Fig. 1 showing a vertical cross-sectional view taken along a blade rotary axis.
- Fig. 3: is a side view of the entire riding type mower.
- Fig. 4: is a plan view of the entire riding type mower.
- Fig. 5: is a plan view of the mower unit.
- Fig. 6: is a vertical cross-sectional view of the mower unit taken along a rotary axis.
- Fig. 7: is a vertical cross-sectional view of a mown grass discharge port region of the mower unit.
- Fig. 8: is a bottom view showing a blade region of the mower unit.
- Fig. 9: is an exploded perspective view of a rotary shaft, a fan unit and a blade.
- Fig. 10: is a schematic drawing of the mower unit having a plurality of blades arranged side by side for illustrating a basic concept of a second embodiment of the present invention.
- Fig. 11: is a schematic drawing of the mower unit having a single blade for illustrating a basic concept of the second embodiment of the present invention.
- Fig. 12: is a side view of the entire riding type mower.

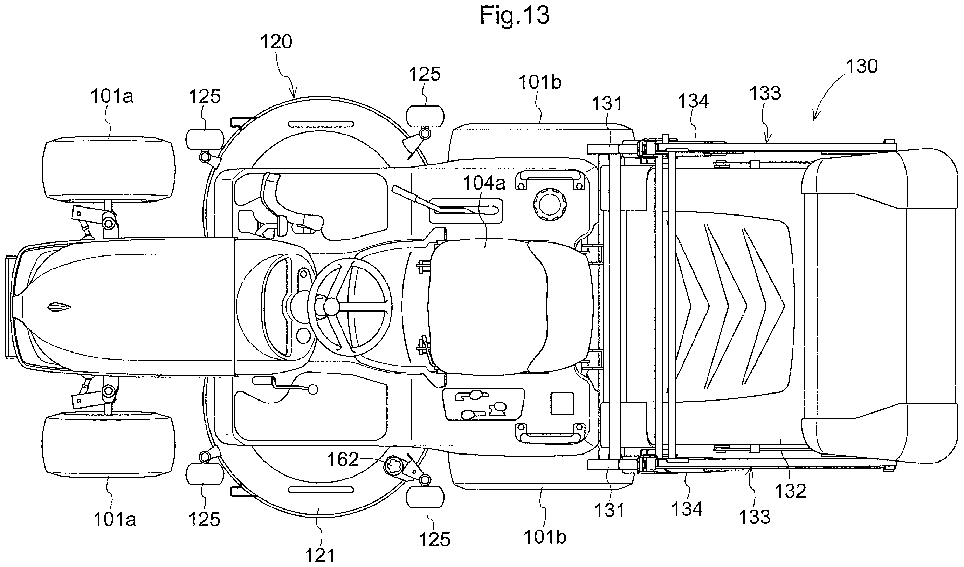

- Fig. 13: is a plan view of the entire riding type mower.
- Fig. 14: is a plan view of the mower unit.
- Fig. 15: is a plan view of the mower unit with a horizontally sectional discharge cover.
- Fig. 16: is a cross-sectional view of a blade unit.
- Fig. 17: is a vertical partially sectional side view of the mower unit.
- Fig. 18: is a perspective view of an upper component of a discharge cover.
- Fig. 19: is a schematic drawing showing a plurality of intake parts.
- Fig. 20: is a schematic drawing showing an auxiliary intake part.
- Fig. 21: is a schematic drawing showing an auxiliary intake part.
- Fig. 22: is a schematic drawing showing an auxiliary intake part.
- Fig. 23: is a schematic drawing showing an auxiliary intake part.
- Fig. 24: is a schematic drawing showing a cylinder guard.
- Fig. 25: is a side view of a riding type mower of a third embodiment.
- Fig. 26: is a plan view of the mower unit having a fastening structure of a first mode of the third embodiment.
- Fig. 27: is an enlarged exploded perspective view showing the fastening structure of the first mode.
- Fig. 28: is an enlarged vertical partially cross-sectional view showing the fastening structure of the first mode, wherein (A) shows a state in which a male screw member is fastened, (B) shows a state in which the fastening of the male screw member is released, and (C) shows a state in which a retaining member is in a standing posture.
- Fig. 29: is an enlarged exploded perspective view showing a fastening structure of a second mode of the third embodiment.
- Fig. 30: is an enlarged vertical partially cross-sectional view showing the fastening structure of the second mode, wherein (A) shows a state in which a male screw member is fastened, and (B) shows a state in which the fastening of the male screw member is released.
- Fig. 31: is an enlarged exploded perspective view showing a fastening structure of a third mode of the third embodiment.
- Fig. 32: is an enlarged vertical partially cross-sectional view showing the fastening structure of the third mode, wherein (A) shows a state in which a male screw member is fastened, and (B) shows a state in which the fastening of the male screw member is released.
- Fig. 33: is an enlarged perspective view showing a fastening structure of a fourth mode of the third embodiment.
- Fig. 34: is an enlarged vertical partially cross-sectional view showing the fastening structure of the fourth mode, wherein (A) shows a state in which a male screw member is fastened, and (B) shows a state in which the fastening of the male screw member is released.
- Fig. 35: is an enlarged exploded perspective view showing a part of a fastening structure of a fifth mode of the third embodiment.
- Fig. 36: is an enlarged vertical partially cross-sectional view showing a part of the fastening structure of the fifth mode.
- Fig. 37: is an enlarged perspective view showing a fastening structure of another mode of the third embodiment.
- Fig. 38: is an enlarged perspective view showing a fastening structure of still another mode of the third embodiment.
- Fig. 39: is an enlarged vertical partially cross-sectional view showing a fastening structure of still more another mode of the third embodiment.

### DETAILED DESCRIPTION OF THE PREFERRED EMBODIMENTS

### [First embodiment]

Hereinbelow, the mower unit according to the present invention will be described with embodiments with reference to the drawings. The terms "right", "left", "transverse", "front (frontward)", "rear (rearward)", "upper (upward)", "lower (downward)", "vertical" or similar expressions thereof with respect to components refer to the corresponding directions seen from a driver seated in a driver's seat.

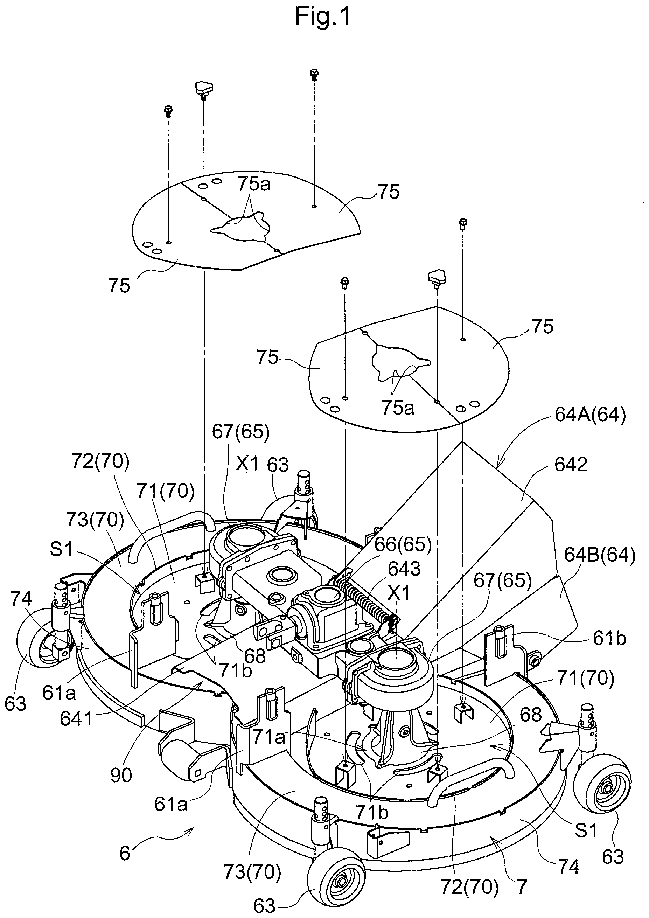

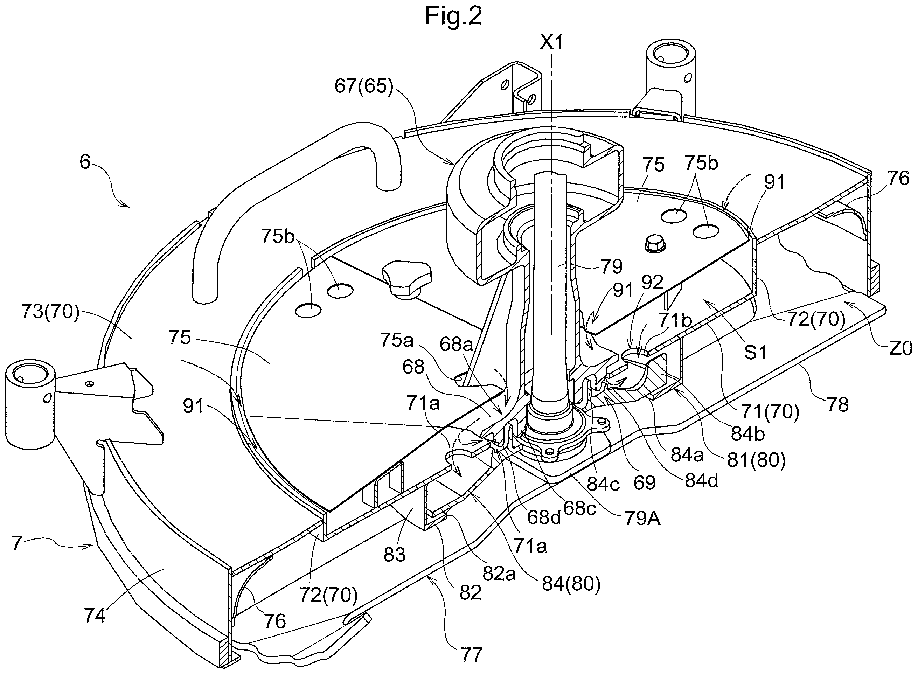

Before giving descriptions of an embodiment of a mower unit 6 according to the present invention, a basic configuration that characterizes the present invention will be described herein with reference to Figs. 1 and 2.

Fig. 1 shows a state of the mower unit 6 according to the present invention in which a discharge cover 64 is removed upward relative to a blade housing 7, by which a blade drive unit 65 can be seen. It is noted that the blade housing 7 is of a double-blade type in which two blades are arranged side by side. As is apparent from Fig. 2, each blade 78 is fixed to a rotary shaft 79 rotatable about a rotary axis X1 extending in a vertical direction. Further, immediately above the blade 78, a fan unit 80 is provided that has a fan 84 fixed to the rotary shaft 79. Since the blade housing 7 has a configuration in which two substantially same cover components covering respective blade units 77 from above are joined, the descriptions herein will be made while focusing only on one cover component. Fig. 2 is a perspective sectional view of a half of a single cover component.

The blade housing 7 is constituted of a top panel 70 and a side plate 74 extending downward from an edge of the top panel 70. On an inner side of the blade housing 7, a mowing space Z0 is formed that accommodates the blade unit 77, and on an outer side of the blade housing 7, a recess S1 is formed which spreads radially from the rotary shaft 79 of the blade 78. Accordingly, the top panel 70 of the blade unit 77 is substantially formed of an inner top panel 71 extending radially from the rotary axis X1, a step plate 72 extending upward from an outer edge of the inner top panel 71, and an outer top panel 73 extending radially from an upper edge of the step plate 72. Therefore, the side plate 74 extends downward from an outer end of the outer top panel 73, and is in a shape of approximate "8" when seen from the above.

As shown in Fig. 2, an upper part of the recess S1 is covered with a deck lid 75 in a shape of an approximate circle, and as a result, an intermediate space S1 in a shape of an approximate column is created above the mowing space Z0. The intermediate space S1 is not a completely sealed space, and a primary air flowing part 91 that allows air to flow between outside and the intermediate space S1 is formed in a boundary between the deck lid 75 and the blade unit 77, or the deck lid 75 itself. For example, a gap formed between an outer peripheral edge of the deck lid 75 and the blade unit 77 may be utilized as the primary air flowing part 91. In the deck lid 75 illustrated herein, a round hole 75b for gripping is formed, or a handle may be provided instead of the round hole 75b. When the round hole 75b is present, it can be utilized as the primary air flowing part 91. Of course, since the intermediate space S1 is a buffer space for supplying ambient air to the mowing space Z0, a secondary air flowing part 92 is formed that allows air to flow between the intermediate space S1 and the mowing space Z0. As the secondary air flowing part 92, it is preferable to form a through-hole 71b in the inner top panel 71. By positioning the through-hole 71b within a rotation locus of the fan 84 when seen from above, air from the through-hole 71b is sent to the mowing space Z0 via the fan 84, and thus an effective ambient air supply is realized.

As is apparent from Fig. 2, the deck lid 75 as illustrated is mounted in such a manner that an upper face of the deck lid 75 is flush with an upper face of the outer top panel 73, to thereby prevent mown grass and the like from remaining on the top panel 70. An upper face of the top panel 70 formed by the upper face of the deck lid 75 and the upper face of the outer top panel 73 is not necessarily horizontal, and from the viewpoint of preventing mown grass from remaining on the deck lid 75, it is preferable that the upper face of the top panel 70 has a tilt to some extent.

It is noted that, as can be inferred from Fig. 1, a mown grass discharge port 17 for discharging mown grass from the mowing space Z0 is provided by cutting out a portion of the top panel 70 and a portion of the side plate 74, and the mown grass discharge cover 64 is provided so as to cover the mown grass discharge port 17. Inside the mown grass discharge cover 64, a portion of a mown grass discharging-conveying flow path is formed. The mown grass discharge cover 64 is composed of an upper component 64A and a lower component 64B. The upper component 64A extends beyond the mown grass discharge port 17, continues above the top panel 70 of the blade housing 7 spaced apart slightly from the top panel 70, and reach an area of an outer end of the blade housing 7 where an ambient air vent port 90 is formed. In other words, the ambient air vent port 90 communicates with the above-mentioned portion of the mown grass discharging-conveying flow path and with the subsequent portion thereof, and additional air is supplied to conveying air passing such regions.

Further, as shown in Fig. 2, an arrangement may be adopted in which the fan unit 80 is disposed above the blade 78 and composed of the fan 84 fixed to the rotary shaft 79 and a fan shroud 81 fixed to the inner top panel 71. In this case, if a labyrinth structure 69 extending in a circumferential direction around the rotary axis X1 is formed between the fan 84 and a bearing case 67 receiving the rotary shaft 79, intrusion of water or the like into a bearing 67a mounted in the bearing case 67 can be suppressed.

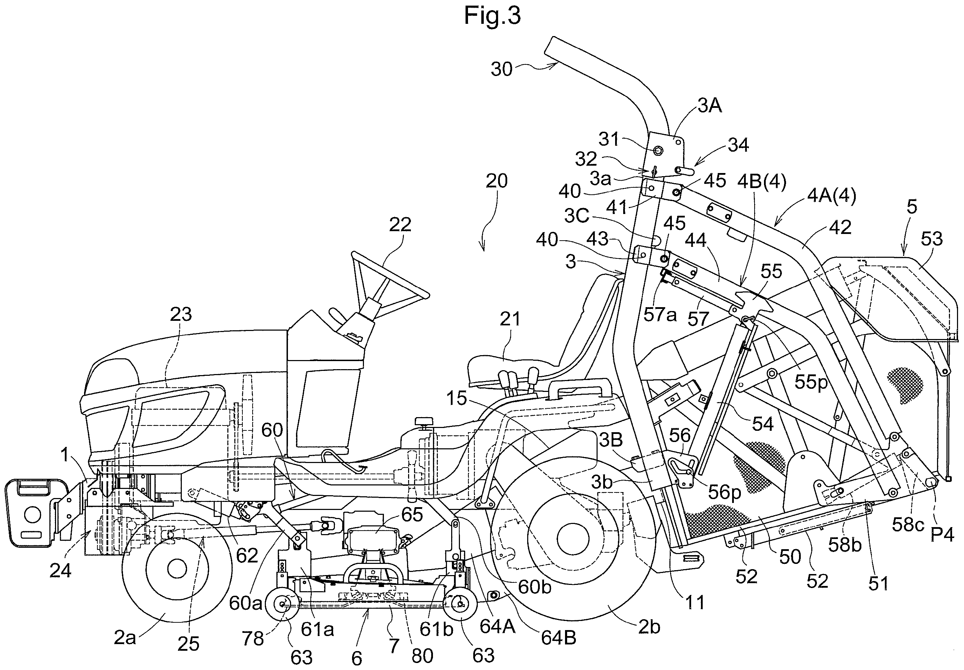

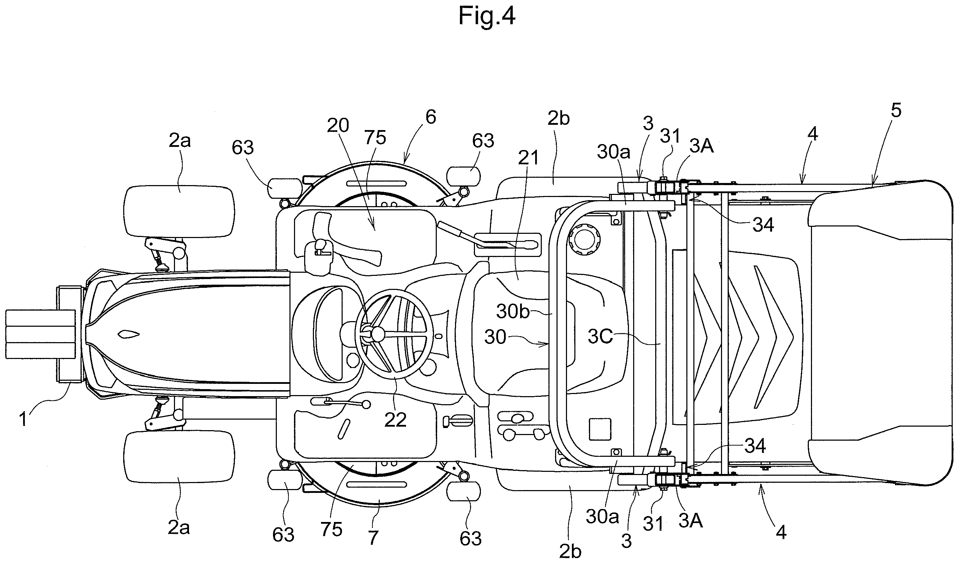

Next, with reference to the drawings, an embodiment of the mower unit according to the present invention will be described. Fig. 3 is a side view of a riding type mower (hereinbelow, simply referred to as "mower") in which the mower unit 6 having two blades side by side is mounted between a front wheel 2a and a rear wheel 2b, and Fig. 4 is a plan view thereof. The mower unit 6 in this embodiment will be described below in detail, while the basic configuration described above with reference to Figs. 1 and 2 is adopted.

This mower includes: a pair of the right and left steerable front wheels 2a; a pair of the right and left drivable rear wheels 2b; and a body frame 1. A driving part 20 including a driver's seat 21 and a steering wheel 22 is disposed in a rear portion of the body frame 1. Between the front wheel 2a and the rear wheel 2b, the mower unit 6 is suspended from the body frame 1 via a lifting link mechanism 60 formed as a parallel link mechanism.

In a front portion of the body frame 1, an engine 23 is disposed, and a power transmission mechanism 24 for transmitting the power of the engine 23 extends rearward from the engine 23. The power transmission mechanism 24 includes a power transmission mechanism for traveling (not shown) that transmits the power to the rear wheel 2b, and a power transmission mechanism for working (not shown) that transmits the power to the mower unit 6. The power transmission mechanism for traveling receives the power from an output shaft of the engine 23 oriented frontward of the vehicle body, and transmits the power to the rear wheel 2b through a transmission device disposed under the driver's seat 21. The power transmission mechanism for working receives the power from the output shaft of the engine 23 oriented frontward of the vehicle body, and transmit the power to the blade drive unit 65 disposed above the blade housing 7 of the mower unit 6. The mower performs mowing work of manicuring lawn or grass by traveling while driving the mower unit 6.

The lifting link mechanism 60 includes: a pair of right and left front links 60a vertically swingably supported by the body frame 1; a pair of right and left rear links 60b vertically swingably supported by the body frame 1; and a pair of right and left interlocking links 60c. A distal end portion of each of the right and left front links 60a is connected to a corresponding front bracket 61a positioned in a front portion of the blade housing 7 of the mower unit 6. A distal end portion of each of the right and left rear links 60b is connected to a corresponding rear bracket 61b positioned in a rear portion of the blade housing 7. Through the right and left interlocking links 60c, the front link 60a and the rear link 60b on the same corresponding side are connected. A pair of the right and left front links 60a are interlockingly connected through a single swing shaft (not shown). A lift cylinder 62 is interlocked with the left front link 60a. In other words, the lifting link mechanism 60 is vertically moved relative to the body frame 1, via the swing displacement of the front link 60a by the lift cylinder 62. With this configuration, there are realized a lowered working state in which ground gauge wheels 63 supported by front and rear portions of the blade housing 7 of the mower unit 6 are grounded, and a lifted non-working state in which the ground gauge wheels 63 are lifted up from the ground.

When the mower travels while the mower unit 6 is put into the lowered working state and the blade unit 77 disposed inside the blade housing 7 of the mower unit 6 is rotatively driven, mowing on a grass field or turf is performed. During this mowing, by the wind generated through the driving of the blade unit 77, the mown grass is sent to a mown grass conveyance duct 15 through the discharge cover 64 provided above the blade housing 7. The mown grass conveyance duct 15 extends in a front-rear direction of the vehicle body between a pair of the right and left rear wheels 2b, and is connected to a grass-collecting container 5 disposed rearward of the body frame 1. With this configuration, grass mown in the blade housing 7 is collected to the grass-collecting container 5.

As can be seen in Figs. 3 and 4, immediately after the driver's seat 21 in the front-rear direction of the vehicle body and on right and left ends of the body frame 1, a pair of right and left vertical posts 3 are arranged. Each vertical post 3 is a square pipe having a rectangular cross section, which pipe is bent about in the middle at a bend angle of approximately 160° in the front-rear direction but as a whole extends upward. On an inner side face of a base end portion 3b which is a lower end region of the vertical post 3, a fixing bracket 3B is formed. In addition, at positions corresponding to the fixing brackets 3B, there are formed respective side receivers 11 protruding outward in the transverse direction of the vehicle body from the right and left ends of the body frame 1. A receiving face is formed in an upper portion of the side receiver 11. On each lateral side, by laying a fixing face formed in a lower portion of the fixing bracket 3B on top of the receiving face and connecting to each other with a bolt, a pair of the right and left vertical posts 3 are fixed with high rigidity on both lateral sides of the body frame 1. A pair of the right and left vertical posts 3 are connected to each other via a plurality of cross beams 3C extending in the transverse direction of the vehicle body.

In a free end portion 3a which is an upper end region of the vertical post 3, there is provided a connecting part 3A for connecting an upper unit 30 swingably about a transversal axis P1 to the vertical post 3. The connecting part 3A is formed as a channel-shaped member so as to surround three side faces of the free end portion 3a which is a square pipe having a rectangular cross section, and is welded and connected to a free end portion 30a of the vertical post 3. A swing mechanism of the upper unit 30 relative to the vertical post 3 is realized by coaxially forming through-holes having the transversal axis P1 in a pair of the right and left connecting parts 3A as well as the free end portions 30a of the upper units 30 on both lateral sides, and by installing a swing shaft 31 into these through-holes.

The upper unit 30 is a gate-shaped frame having a similar cross section as that of the vertical post 3, and each of the free end portions 30a on both lateral sides is in a straight line shape, while the portion there above is bent frontward at an angle of approximately 90°. To put it another way, the upper unit 30 is a U-shaped frame as a whole, whose upper portion is bent forward when seen from a lateral side. With this shape, when the upper unit 30 is at a swing position where the free end portion 30a and the free end portion 3a of the vertical post 3 substantially overlap each other on each of both lateral sides, an arch part 30b of the upper unit 30 comes above a head of a driver sitting on the driver's seat 21. In the present embodiment, this swing position is referred to as an extended swing position. When the upper unit 30 is swung downward from the front while the driver's seat 21 is shifted forward, the arch part 30b of the upper unit 30 reaches the swing position which is a position rearward of the driver's seat 21. In the present embodiment, this swing position is referred to as a retracted swing position. Between the connecting part 3A and the upper unit 30, there is provided a locking device 32 for locking the upper unit 30 at the above-mentioned extended swing position and retracted swing position.

In an upper region of a pair of the right and left vertical posts 3, a link mechanism 4 formed as a parallel 4-point link mechanism is removably mounted, and the grass-collecting container 5 is supported by the link mechanism 4. The link mechanism 4 connects an upper end portion of the vertical post 3 and a lower end portion on a rear end side of the grass-collecting container 5. On each of the right and left sides of the grass-collecting container 5, a lift cylinder 54 of a hydraulic type is disposed as a piston cylinder for lifting the link mechanism 4. In addition, below the grass-collecting container 5 on the rear end side thereof, a single dump cylinder 58b formed of a hydraulic cylinder is disposed. On each of the right and left sides of the grass-collecting container 5, a dump link mechanism 58a for overturning the grass-collecting container 5 by the expansion and contraction of the dump cylinder 58b is provided.

Each of a pair of the right and left link mechanisms 4 includes: an upper link 4A; a lower link 4B; and a container-side link 51. The container-side link 51 functions as a connection link for connecting the upper link 4A and the lower link 4B with a predetermined interval therebetween, also serves as a container bracket of the grass-collecting container 5, and functions as a rear end frame of the grass-collecting container 5.

The upper link 4A includes an upper bracket 41 and an upper link body 42, while the lower link 4B includes a lower bracket 43 and a lower link body 44. The upper bracket 41 is provided with a mounting part 41a and a swing fulcrum part 41b, while the lower bracket 43 is provided with a mounting part 43a and a swing fulcrum part 43b. The mounting parts 41a and 43a are removably attached to the vertical post 3, and the swing fulcrum parts 41b and 43b are swingably connected to the respective link body (the upper link body 42 or the lower link body 44).

The upper bracket 41 swings about a link swing axis P2 relative to the upper link body 42. Accordingly, when the mower moves backward to the link mechanism 4 with the grass-collecting container 5 in a self-standing state so as to place the vertical post 3 into the mounting part 43a, it is important that the posture of the mounting part 41a is properly kept in such a manner that an opening of the U-shape of the mounting part 41a faces the vertical post 3. In order to realize the proper posture of the mounting part 41a relative to the vertical post 3, it is necessary in the grass-collecting container 5 in a self-standing state to keep the postures of the components within the acceptable range, the postures including the posture between the upper link body 42 and the lower link body 44, the posture of the upper bracket 41 relative to the upper link body 42, and the posture of the lower bracket 43 relative to the lower link body 44. For this reason, a lower face of an end portion on the vehicle body side of each of the upper link body 42 and the lower link body 44 is provided with a stopper plate 46a so as to prohibit the upper bracket 41 and the lower bracket 43 from swinging downward about the link swing axis P2 beyond the respective predetermined positions.

Each of a pair of the right and left lift cylinders 54 for vertically moving the link mechanism 4 connects the lower link body 44 and the base end portion 3b of the vertical post 3. Specifically, a piston end portion of the of the lift cylinder 54 is swingably connected via a first support pin 55p to a first cylinder bracket 55 fixed to the lower link body 44. A cylinder end portion of the lift cylinder 54 is connected via a second support pin 56p to a second cylinder bracket 56 fixed to the base end portion 3b of the vertical post 3.

The first cylinder bracket 55 is provided with a prop bar 57 which is swingable about a transversal axis. When the piston of the lift cylinder 54 is expanded to the maximum, the prop bar 57 swings downward so that a distal end portion of the prop bar 57 is locked to a cylinder end of the lift cylinder 54 to prevent the piston from lowering. Other than this situation, the prop bar 57 swings to a retracted posture along the lower face of the lower link body 44 and the distal end portion thereof is locked to a holder provided on the lower link body 44.

By the expansion and contraction of the piston of the lift cylinder 54, the link mechanism 4 is vertically and swingably displaced relative to the vertical post 3, and thus the grass-collecting container 5 is moved vertically between a lowered collection position where the grass-collecting container 5 is lowered rearward of a rear end portion of a mown grass conveyance duct 8 and a lifted discharging position where the grass-collecting container 5 is lifted rearward and upward of the rear end portion of the mown grass conveyance duct 8.

The grass-collecting container 5 includes a container main body 50 and a container frame 52 enhancing the rigidity of the container main body 50. A core component member of the container frame 52 is a container bracket 51 which substantially supports the container main body 50. The container bracket 51 also functions as a container-side bracket of the link mechanism 4, and thus connects the lower link body 44 and the upper link body 42 via a swing fulcrum.

The grass-collecting container 5 is provided with a lid 53 that opens and closes a mown grass discharge port 50a positioned on a rear end side of the container main body 50. The grass-collecting container 5 shifts from a lowered collecting posture to a lifted discharging posture by swinging about a swing axis P4. In the lifted discharging posture, the mown grass discharge port 50a is oriented downward, and a mown grass collection port 50b positioned on a front end side of the container main body 50 is oriented upward. In the lowered collecting posture, the mown grass collection port 50b is oriented frontward of the vehicle body, and the mown grass discharge port 50a is oriented rearward of the vehicle body.

The dump cylinder 58b is connected to a dump arm 58c which is swingable about the swing axis P4, under the grass-collecting container 5 and in an intermediate portion in the transverse direction of the grass-collecting container 5. By swinging the dump arm 58c about the swing axis P4, the grass-collecting container 5 is also swung about the swing axis P4, and due to the action of a pair of right and left dump link mechanisms 58a, the grass-collecting container 5 is switched between the above-mentioned lifted discharging posture and lowered collecting posture. The dump link mechanism 58a connects a frame member of the lid 53, the container frame 52 and the container bracket 51 via a swing fulcrum. Since this structure is well-known, a detailed description is omitted here. The dump cylinder 58b and the dump arm 58c are accommodated in a recess formed in a bottom plate of the container main body 50, when the grass-collecting container 5 is in the lowered collecting posture.

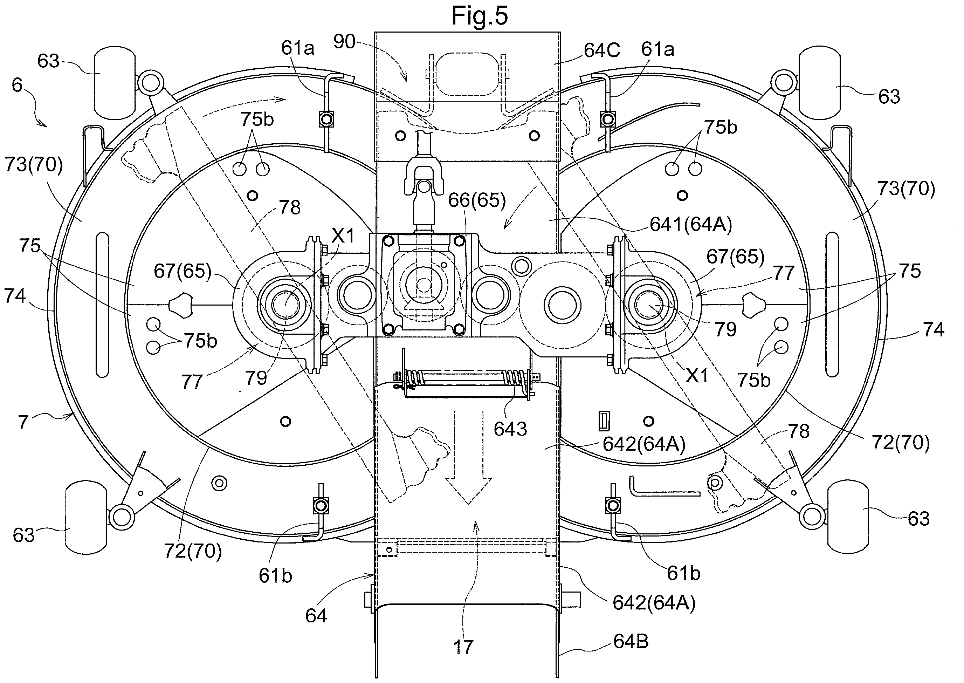

Hereinbelow, the structure of the mower unit 6 will be described in detail with reference to Figs. 5 to 9.

The blade housing 7 of the mower unit 6 includes: the top panel 70; and a side plate 76 extending downward from an outer edge portion of the top panel 70. The blade housing 7 accommodates the right and left blade units 77 arranged side by side, and the fan units 80. Each of the blade units 77 has the blade 78 rotatable about the rotary shaft 79 having the rotary axis X1 extending in a vertical direction. Two mowing spaces Z0 are formed in the blade housing 7 so as to correspond to the rotation loci of the blades 78, and between two mowing spaces, there is formed a mown grass discharge space (schematically shown with a dotted thicker arrow in Fig. 5) including the mown grass discharge port 17 provided in the top panel 70. The mowing space Z0 is covered with the top panel 70 from above, and the mown grass discharge space is covered with the upper component 64A of the discharge cover 64 from above. The mown grass discharge port 17 is formed by cutting out a portion of the top panel 70 rearward of a vicinity of the rotary axis X1, with a width in the transverse direction that is almost half a distance between the two rotary axes X1.

Rotational directions of the blades 78 (shown with single line-dotted arrows in Fig. 5) are determined so that the wind flows generated by the rotation of blowing wings of the blades 78 are joined in the mown grass discharge space which is a boundary region between the two mowing spaces Z0, and the joined flow passes through the mown grass discharge port 17, and runs rearward and upward. The conveying air carrying mown grass, which has been passed through the mown grass discharge port 17 while entraining mown grass in the mowing space Z0, further passes through a mown grass discharge passage which is an inner space of the discharge cover 64 and further flows into the mown grass conveyance duct 15.

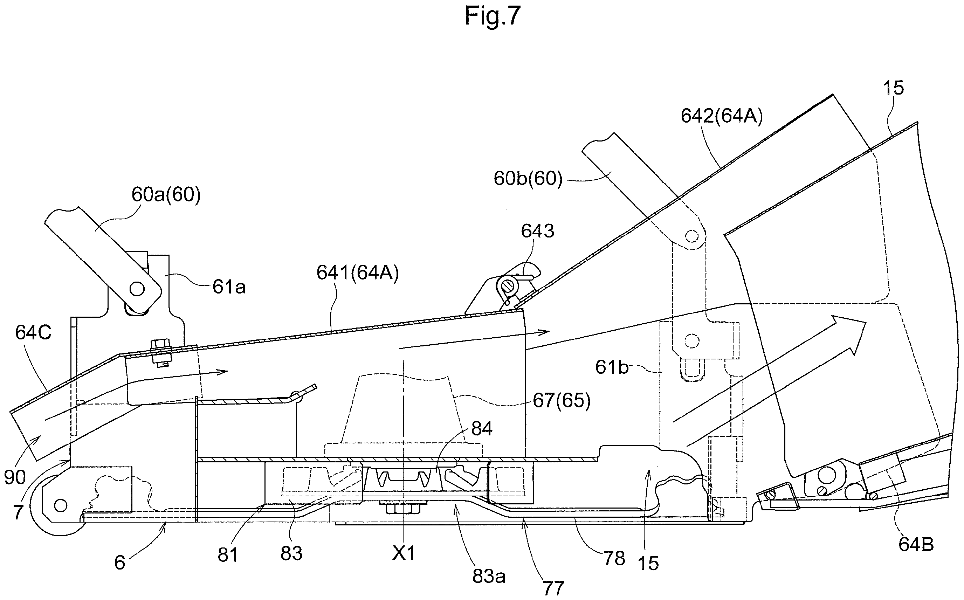

As shown in Fig. 7, the discharge cover 64 includes the upper component 64A and the lower component 64B. The lower component 64B includes a pair of right and left side wall plates and a connecting plate for connecting these side wall plates, and fixed to the blade housing 7 at both lateral end portions of the mown grass discharge port 17. The upper component 64A is formed of two divided bodies including a front member 641 and a rear member 642, each having a U-shaped cross section. The front member 641 extends in the front-rear direction so as to cover a front region of the mown grass discharge port 17 and the outer top panel 73, and to form an air-intake path having a slip-shaped cross section between the front member 641 and the upper face of the outer top panel 73, which cross section is narrower in the vertical direction and wider in the transverse direction, and to further form an ambient air vent port at a front end of the air-intake path. The front member 641 extends beyond the outer end of the blade housing 7, and in a front end portion of the front member 641, a U-shaped deflector 64C that deflects the flow inside the air-intake path generated by the front member 641 to a downward direction. The role of the deflector 64C is to downward direct mown grass scattering out from the air-intake path and to prevent mown grass from being thrown up above the blade housing 7, which may otherwise be caused by backflow of mown grass from the mown grass discharge port 17 through the air-intake path due to clogging of the mown grass conveyance duct 15 or the like. During regular mowing work, this air-intake path functions to take in air from outside in order to reinforce the conveying air that passes through the mown grass discharge port 17 at a high speed.

The rear member 642 of the upper component 64A is connected to a rear end portion of the front member 641 so as not to create a gap therebetween. In the vicinity of the connecting portion with the rear member 642, the front member 641 is provided with a pair of right and left support parts 644, and the rear member 642 is supported by the support parts 644 in such a manner that the rear member 642 is vertically swingable about a shaft 645 having a transversal axis. Right and left side panels of the rear member 642 have shapes so as to be brought into surface contact with the side wall plates of the lower component 64B during the vertical swing of the rear member 642. Further, the upper component 64A is urged swingably upward by a spring 643. With this configuration, regardless of the change in the vertical interval between the blade housing 7 and the mown grass conveyance duct 15 caused by the vertical movement of the mower unit 6, a rear end portion of the upper component 64A remains in contact with an inner face of the conveyance duct 15.

In the top panel 70, the recesses S1 are formed each having an approximately circular shape having its center with the rotary axis X1. Accordingly, the top panel 70 includes: the inner top panel 71 forming a bottom face of the recess S1; the step plate 72 forming a side face of the recess S1; and the outer top panel 73 which is the remainder. When the deck lid 75 covering the recess S1 is installed, the deck lid 75 is flush with the outer top panel 73 and the deck lid 75 forms an upper face of the recess S1. With the installation of the deck lid 75, a substantially closed intermediate space which mown grass and pebbles are unlikely to enter is created in the recess S1 (hereinbelow, the reference character "S1" is also given to the intermediate space). At the same time, the primary air flowing part 91 is also formed that has a dimension enough to allow ambient air to enter the intermediate space S1. From this point of view, as the deck lid 75, a porous plate may be used that does not allow mown grass or pebbles to pass through but allows air to pass.

The blade drive unit 65 is disposed above the top panel 70 to transmit the rotational power to each rotary shaft 79. The blade drive unit 65 includes: a drive case 66 that has a gear transmission mechanism built in for receiving the power from a vehicle body side and distributing the power to the right and left rotary shafts 79; and the bearing cases 67 each of which is connected to the corresponding end of the drive case 66 and receives the rotary shaft 79. The bearing case 67 extends in a vertical direction and a lower portion thereof is provided with a flange part 68. In order to prevent interference with the bearing case 67, the deck lid 75 has a cutout 75a whose dimension corresponds to a profile of the bearing case 67, and the inner top panel 71 has a through-hole 71a coaxially with the rotary axis X1. The flange part 68 of the bearing case 67 is attached by inserting into the through-hole 71a of the inner top panel 71 and fixed to the inner top panel 71. In order to be fixed to the inner top panel 71, the flange part 68 has a skirt part 68a having a large diameter and a radially projecting piece of the skirt part 68a is connected to the inner top panel 71 with a bolt.

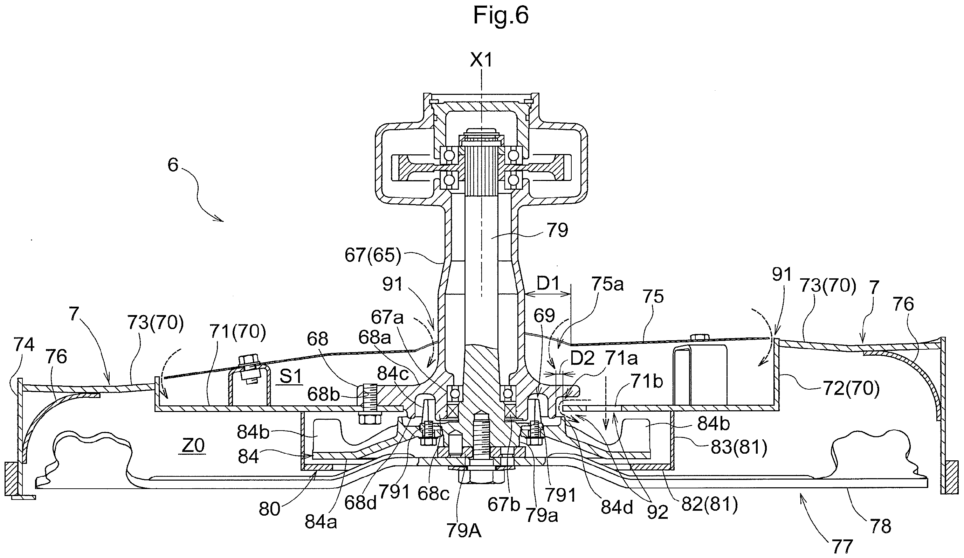

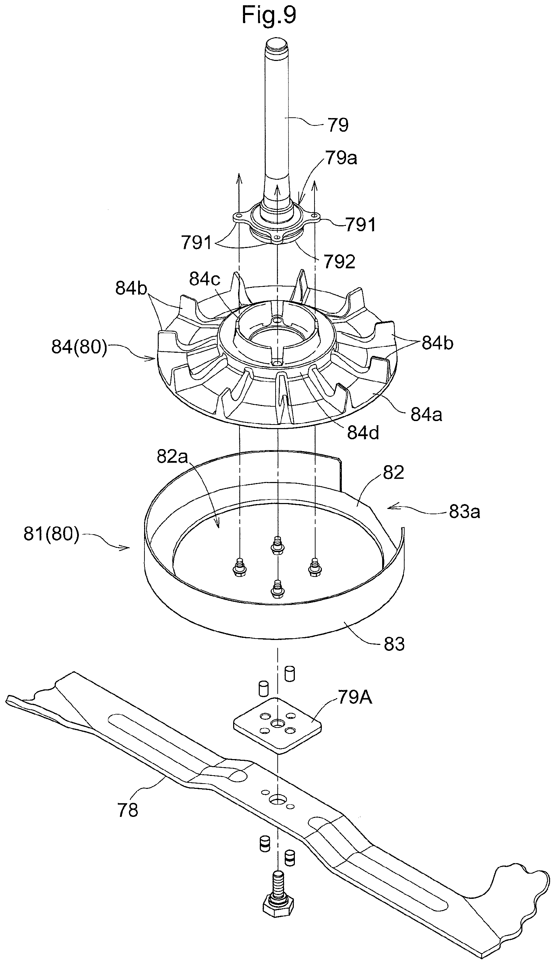

As shown in Fig. 6, the rotary shaft 79, which is a blade shaft, is aligned by the bearing 67a arranged on an inner periphery of the flange part 68 of the bearing case 67 and has a protrusion 79a protruding downward (see Fig. 9). The protrusion 79a is provided with four flange arms 791 extending radially, and the fan 84 of the fan unit 80 is attached to the flange arm 791. As shown in Fig. 9, the fan unit 80 further includes the fan shroud 81. The fan shroud 81 includes: an annular bottom wall 82 in a flattened circular shape; and a side wall 83 standing from an outer peripheral end of the annular bottom wall 82, so that the fan shroud 81 together with an upper wall formed of the flange part 68 of the bearing case 67 and the inner top panel 71 creates a wind generating space S2 (see Fig. 6). A portion of the side wall 83 is cut out to form an air blowoff port 83a. A position of the blowoff port 83a is usually set to a position where the flows of the conveying air generated by the two blades 78 are joined, i.e. oriented toward the mown grass discharge port 17. The fan 84A is in a form of a fan plate, and a plurality of blowing wings 84b are arranged in a circumferential direction on an outer peripheral region of a circular base plate 84a. The base plate 84a is laid on top of the annular bottom wall 82 of the fan shroud 81 in such a manner that the base plate 84a covers a central hole of the annular bottom wall 82 but is not in direct contact with the annular bottom wall 82.

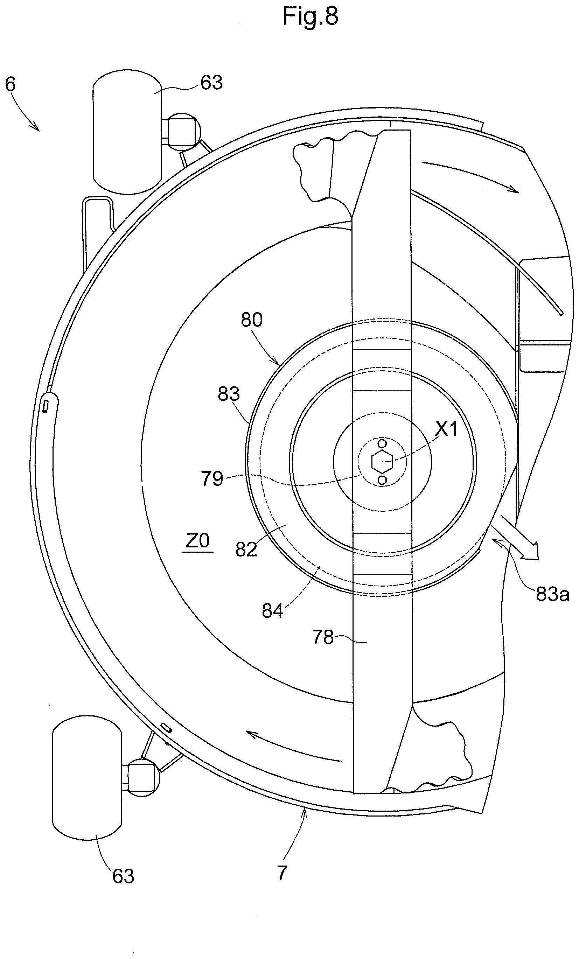

In the present embodiment, the base plate 84a of the fan 84 is in a circular shape, while an outer peripheral shape of the annular bottom wall 82 of the fan shroud 81 is in a non-circular shape, similar to a spiral curve, as can be understood from Fig. 8. By performing bending processing on the side wall 83 so as to make the side wall 83 correspond to an outer edge of the annular bottom wall 82, the fan shroud 81 can be obtained that has a spiral curve-like air flow space whose flow cross section between the side wall 83 and the fan 84 becomes gradually larger. The blowoff part 83a is formed as a cutout in the side wall 83 at a position corresponding to the position where the flow cross section of the air flow space becomes largest.

In a lower face of the flange part 68 of the bearing case 67, i.e. back of the skirt part 68a, an inner sleeve 68c and an outer sleeve 68d both protruding downward are formed. The inner sleeve 68c and the outer sleeve 68d are coaxial with the rotary axis X1, and arranged at a distance radially from each other to create an annular space therebetween. In addition, in an upper face of the base plate 84a of the fan 84, an inner annular portion 84c and an outer annular portion 84d both protruding upward are formed. The inner annular portion 84c and the outer annular portion 84d are also coaxial with the rotary axis X1, and arranged at a distance radially from each other to create an annular space therebetween. When assembled, the inner annular portion 84c enters the annular space between the inner sleeve 68c and the outer sleeve 68d, while the outer sleeve 68d enters the annular space between the inner annular portion 84c and the outer annular portion 84d. With this configuration, the labyrinth structure 69 is formed between the flange part 68 of the bearing case 67 and the fan 84, and foreign matters, such as water and pebbles, are prevented from entering the bearing case 67 from the wind generating space S2 in the fan unit 80.

The cutout 75a of the deck lid 75 is designed so that a gap D1 is formed between the bearing case 67 and the deck lid 75. This gap D1 functions as the primary air flowing part 91 that allows air to flow between outside and the intermediate space S1. In a case where the gap D1 of a sufficient size cannot be formed, a gap between the step plate 72 and the deck lid 75 may be provided as the primary air flowing part 91. Further, as the primary air flowing part 91, a small through-hole may be formed in the deck lid 75. In the inner top panel 71, at least one elongate hole 71b (three in Fig. 1) extending in a circumferential direction around the rotary axis X1 is formed. The elongate hole 71b functions as the secondary air flowing part 92 that allows air to flow between the intermediate space S1 and the mowing space Z0. In addition, a first gap is partially formed between the inner top panel 71 and the skirt part 68a of the flange part 68 of the bearing case 67 fixed to the inner top panel 71. Further, the through-hole 71a of the inner top panel 71 is designed so that a second gap is at least partially formed between the inner top panel 71 and an outer periphery (specifically the outer sleeve 68d) of the flange part 68 of the bearing case 67 fixed to the inner top panel 71. Since the first gap and the second gap communicate with each other, a gap D2 is formed that functions as the secondary air flowing part 92 that allows air to flow between the intermediate space S1 and the mowing space Z0.

To a lower end portion of the rotary shaft 79, the blade 78 is fixed with a bolt via a fixing plate 79A. The blade 78 is well-known one, and is formed of a plate-like member having blowing wings on both end portions. A central portion of the blade 78 is bent so as to protrude upward. It is noted that the base plate 84a of the fan 84 has a central hole for allowing the rotary shaft 79 to penetrate therethrough, while a vicinity of the central hole is bent upward, and a recess in a shape of truncated cone is formed in a lower portion of the base plate 84a. The fixing plate 79A and the central portion of the blade 78 are positioned in this recess, and the presence of the fan unit 80 suppresses the blade housing 7 to be expanded in a height direction.

### [Modifications]

(1) In the above-described embodiment, the deck lid 75 covering each recess (intermediate space) S1 is formed as a single plate, but may be formed as two or more divided bodies.
(2) In the above-described embodiment, the front end portion of the front member 641 of the upper component 64A is provided with the deflector 64C, but the deflector 64C may be omitted. Further, the length of the front member 641 may be shortened so that the front end portion of the front member 641 is positioned very close to the mown grass discharge port 17.
(3) In the above-described embodiment, the mower unit 6 having two blade units 77 arranged side by side is illustrated. The present invention is also applicable to the mower unit 6 having only one blade unit 77, or the mower unit 6 having three or more blade units 77 arranged side by side.
(4) In the above-described embodiment, the mower unit 6 having various inventive features disclosed in this specification is applied to the mower in which the engine 23 is disposed in the front portion of the body frame 1, the driver's seat 21 is disposed in the rear portion of the body frame 1, and the mower unit 6 is disposed between the front wheel 2a and the rear wheel 2b. Of course, the mower unit 6 of the present invention is applicable not only to the mower of this type, but also to the mower of other types, such as riding type mower and waking type mower. Further, only a part of the various inventive features may be applicable to the mower unit 6 of various types of mowers, within the scope of the present invention. Examples of various types of mowers include: what is called a front mount type mower in which the mower unit 6 is disposed frontward of the front wheels; a mower in which the engine 23 is disposed rearward of the driver's seat 21, the vertical post 3 is disposed frontward of the engine 23, the grass-collecting container 5 is disposed rearward of the engine, and the link mechanisms 4 are disposed on both lateral sides of the engine 23; and a mower of a rear discharge type or side discharge type which has no grass-collecting container. The various features of the present invention can be entirely or partially applied to the mower unit 6 of various types.

### [Second embodiment]

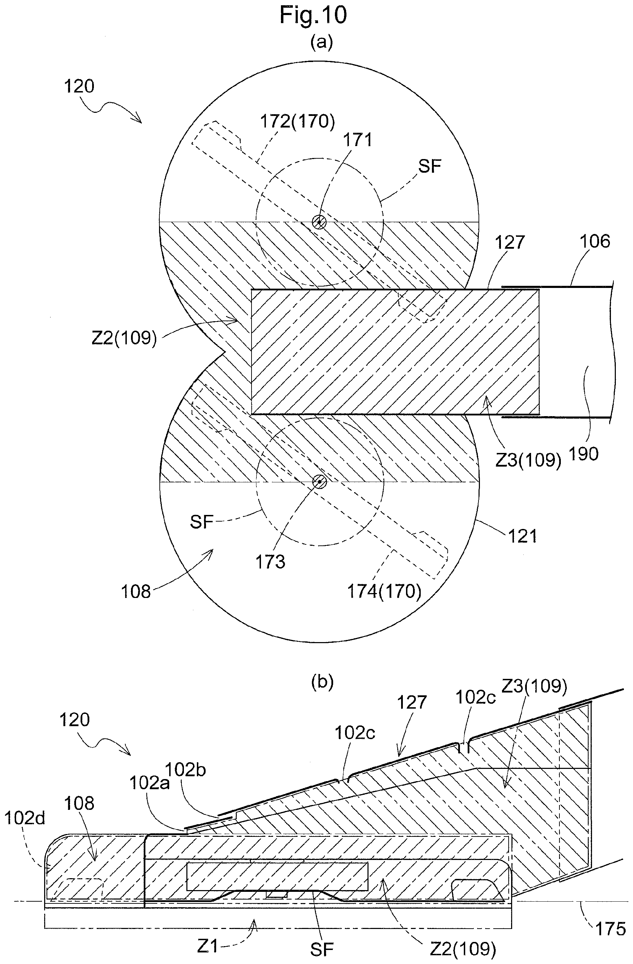

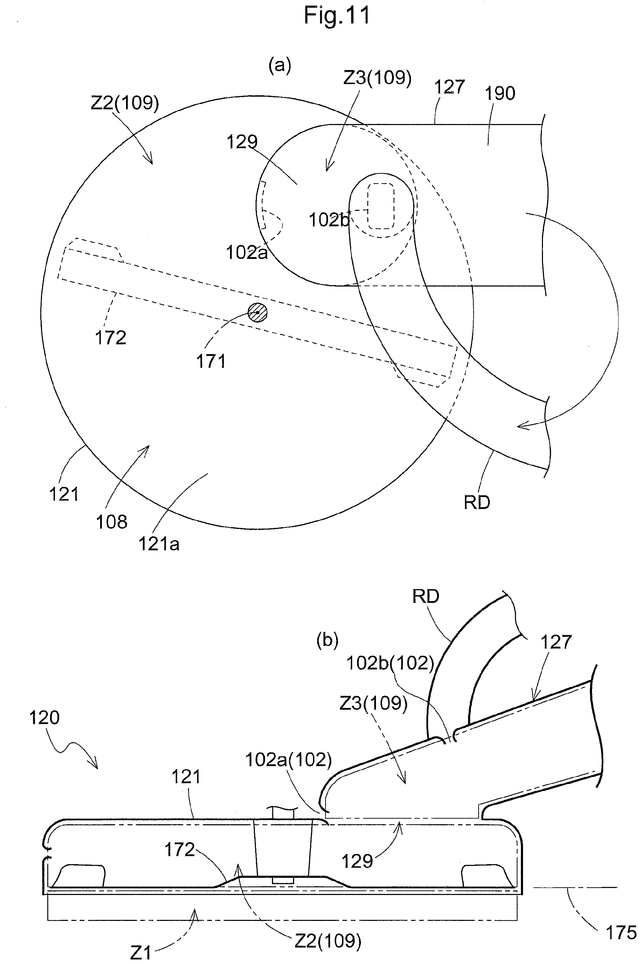

Before giving descriptions of an embodiment of the mower unit according to the present invention, a basic concept of increase in the volume of the conveying air by the intake part characterizing the present invention will be described with reference to Figs. 10 and 11.

First, Fig. 10 shows a plan view of a mower unit having a plurality of (in this case, two) blades arranged side by side (Fig. 10 (a)) and a vertical cross-sectional view thereof (Fig. 10 (b)).

A mower unit 120 includes a blade housing 121 that accommodates a blade unit 170. The blade unit 170 has a first blade 172 rotatable about a first axis 171 extending in a vertical direction and a second blade 174 rotatable about a second axis 173 extending likewise in the vertical direction. The first axis 171 and the second axis 173 are arranged in the transverse direction at a distance smaller than a diameter of the blade, and a rotation locus of the first blade 172 and a rotation locus of the second blade 174 create the same plane (mowing plane 175) with a predetermined interval from the ground. Accordingly, the rotation locus of the first blade 172 and the rotation locus of the second blade 174 partially overlap with each other between the first axis 171 and the second axis 173. Each of the first blade 172 and the second blade 174 has a function to generate the conveying air by its rotation. This rotatinoally-wind-generating function can be obtained simply by providing blowing wings to end portions of the blade. A rotational direction of the first blade 172 and a rotational direction of the second blade 174 are opposite, and between the first axis 171 and the second axis 173, a confluent region is formed where the flows of the conveying air oriented rearward are joined. A mown grass discharge port 129 is provided so as to discharge this confluent conveying air from the blade housing 121.

In the blade housing 121, in order to reinforce the conveying air generated by the first blade 172 and the second blade 174, auxiliary fan units SF are disposed right above the respective blades, the auxiliary fan unit SF having an auxiliary fan integrally rotatable with the corresponding blade. Though not shown in the drawings, an opening for taking in ambient air is formed in the top panel of the blade housing at a position facing the auxiliary fan.

The blade housing 121 includes: a top panel 121 a; and a side plate 121b extending downward from a peripheral edge of the top panel 121a, and an inner space defined by the top panel 121a and the side plate 121b is a mowing space 108. By cutting out a central portion in the vehicle body transversal direction of the top panel 121a, the mown grass discharge port 129 is formed. An outer face of the blade housing 121A is provided with a discharge cover 127 which surrounds an opening edge of the mown grass discharge port 129 and forms inside a discharging-conveying flow path 190 communicating with the mowing space 108 through the mown grass discharge port 129. A rear end of the discharge cover 127 is connected to a conveyance duct 106.

Hereinbelow, a specific region or space in the mower unit 120 where the conveying air is present in the present invention will be defined. An air intake region Z1 is a lower region in the mowing space 108 below the mowing plane 175 defined by the rotation loci of the first blade 172 and the second blade 174 and at the same time between a plane extending in the front-rear direction including the first axis 171 and a plane extending in the front-rear direction including the second axis 173; and a mown grass pre-discharge region Z2 is an upper region in the mowing space 108 above the mowing plane 175. A mown grass post-discharge region Z3 is a region in the discharging-conveying flow path 190, especially in the vicinity of the mown grass discharge port 129. A mown grass discharge space 109 is a region formed by combining the mown grass pre-discharge region Z2 and the mown grass post-discharge region Z3.

Accordingly, an intake part 102 that supplies ambient air to the conveying air either at the time when the flows are joined or after the flows are joined has an ambient air intake opening which is opened to the mown grass discharge space 109. To provide at least one intake part 102 suffices, while Fig. 10 shows an embodiment in which a plurality of intake parts 102 are provided. The first intake part 102 includes an ambient air intake opening 102a formed as a gap between a front portion of the opening edge of the mown grass discharge port 129 and a base end portion of the discharge cover 127. Herein, this gap (ambient air intake opening 102a) has a slit-shaped flow cross section which extends over almost the entire width of the mown grass discharge port 129 and is narrower in the vertical direction. The second intake part 102 includes an ambient air intake opening 102b formed as a base end opening provided in the base end portion of the discharge cover 127. This base end opening (ambient air intake opening 102b) likewise has a slit-shaped flow cross section which extends over almost the entire width of the mown grass discharge port 129 and is narrower in the vertical direction.

Further, in the embodiment illustrated in Fig. 10, the intake part 102 functioning as ambient air intake opening 102c is provided in a form of a plurality of through-holes arranged in the front-rear direction, in an intermediate portion in the front-rear direction of the discharge cover. Moreover, the intake part 102 may be formed in the blade housing 121 as long as it can supply ambient air to the conveying air either at the time when the flows are joined or after the flows are joined. Fig. 10 (b) also shows the intake part 102 functioning as ambient air intake opening 102d in a form of a through-hole provided in a portion of the side plate facing the mown grass pre-discharge region. Though not shown in Fig. 10, it is noted that an eaves member may be provided so as to prevent foreign matters from entering the through-hole (ambient air intake opening 102d). In addition, likewise, though not shown in Fig. 10, an auxiliary intake part having an auxiliary intake opening that is opened to the mowing space 108 may be formed in the blade housing 121.

Fig. 11 schematically shows a plan view of the mower unit 120 of a single blade type having a single blade (Fig. 11 (a)) and a vertical cross-sectional view thereof (Fig. 11 (b)). Like the above-mentioned mower unit 120, the mower unit 120 of a single blade type includes the blade housing 121, the mown grass discharge port 129 and the discharge cover 127. Also in the mower unit 120, the mowing space 108 is a space defined by the top panel and the side plate extending downward from the top panel, and the mown grass discharge port 129 is formed by the cutout in the top panel 121a. The mown grass pre-discharge region Z2 is likewise the upper region in the mowing space 108 above the mowing plane 175 defined by the rotation locus of the blade 172; the mown grass post-discharge region Z3 is likewise the region in the discharging-conveying flow path 190, in the vicinity of the mown grass discharge port 129; and the mown grass discharge space 109 is likewise the region formed by combining the mown grass pre-discharge region Z2 and the mown grass post-discharge region Z3. The discharge cover 127 surrounds the opening edge of the mown grass discharge port 129 and forms inside the discharging-conveying flow path 190 communicating with the mowing space 108 through the mown grass discharge port 129. Herein, the ambient air intake opening 102a of the intake part 102 is a gap formed between the top panel 121a of the blade housing 121 and a front end edge of the discharge cover 127, and is opened to the mown grass discharge space 109. In addition, the ambient air intake opening 102b of the intake part 102 is a through-hole formed in the discharge cover 127.

In addition, in the mower unit 120 of this single blade type, the conveying air is circulating, and a return duct RD is provided which returns the conveying air that has reached the grass-collecting container to the mowing space 108, and an opening end of the return duct RD is connected to the intake part 102. In Fig. 11, the opening end is connected to the ambient air intake opening 102b of the intake part 102, but instead, may be connected to the ambient air intake opening 102a. Alternatively, the opening end portion of the return duct RD may be bifurcated and connected to both the ambient air intake opening 102a and the ambient air intake opening 102b. By circulating the conveying air to the intake part 102 as described above, air can be supplied from the intake part 102 with a higher pressure as compared with the regular ambient air, to thereby enhance the increase of the volume of the conveying air.

It is noted that a circulating conveying air may be adopted also to the mower unit 120 illustrated in Fig. 10, and in this case, the opening end of the return duct RD may be connected to any or all of the ambient air intake openings 102a, 102b, 102c, 102d.

While the mower unit 120 illustrated in Fig. 10 has two blades 172, 174 and the mower unit 120 illustrated in Fig. 11 has a single blade 172, the present invention is also applicable to the mower unit 120 having three or more blades. Since the mown grass discharge port 129 and the discharge cover 127 are provided at a position where the flows of the conveying air generated by a plurality of the blades are joined, it is possible to provide the intake part 102 for supplying ambient air to the conveying air either at the time when the flows are joined or after the flows are joined.

Hereinbelow, the second embodiment of the present invention will be specifically described with reference to the drawings.

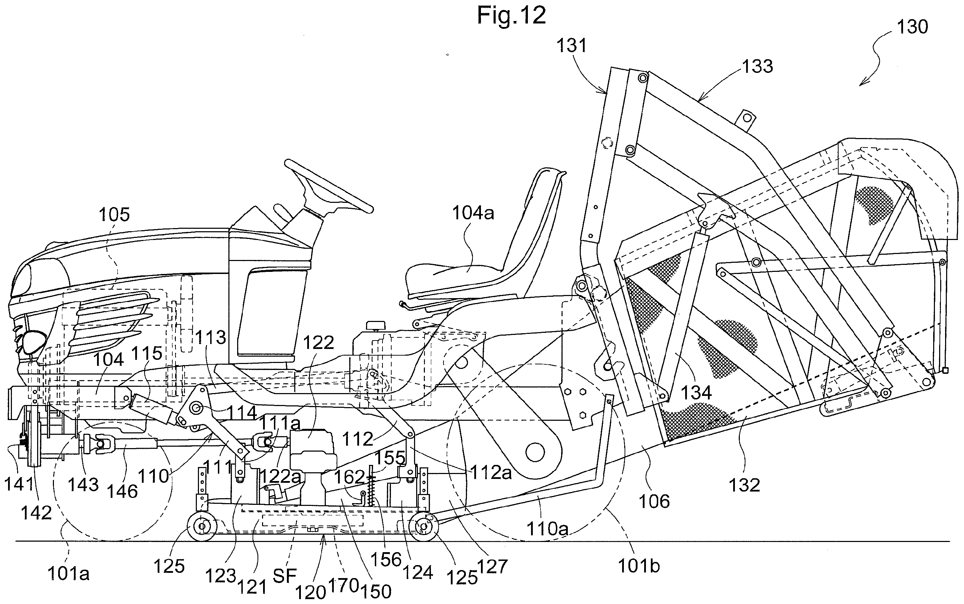

Fig. 12 is a side view of the entire riding type mower of a mid-mount type in which the mower unit 120 is installed in a central portion. As shown in Fig. 12, this riding type mower is self-propelled by a pair of right and left steerable front wheels 101a and a pair of right and left drivable rear wheels 101b. A driving part including a driver's seat 104a is disposed in a rear half portion of a body frame 104 of the riding type mower. In a region between the front wheel 101a and the rear wheel 101b, the mower unit 120 is suspended from the body frame 104 via a link mechanism 110.

In a front portion of the body frame 104, an engine 105 is mounted via a rubber. Below the engine 105, there are horizontally arranged an input shaft 141 for receiving an output from the engine 105 through a transmission belt 142, and a power taking-out shaft 143 connected to the input shaft 141. Further, the engine power is transmitted from the power taking-out shaft 143 through a rotary shaft 146 to a blade drive mechanism 122 of the mower unit 120.

The link mechanism 110 includes: a pair of right and left front swing links 111 vertically swingably supported by the body frame 104, and front intermediate links 111a connected to the respective front swing links 111; a pair of right and left rear swing links 112 vertically swingably supported by the body frame 104, and rear intermediate links 112a connected to the respective rear swing links 112; and a pair of right and left interlocking links 113.

A distal end portion of the front swing link 111 is connected through the front intermediate link 111a to a corresponding right or left front connecting member 123 positioned in a front portion of the blade housing 121 of the mower unit 120. A distal end portion of the rear swing link 112 is connected through the rear intermediate link 112a to a corresponding right or left rear connecting member 124 positioned in a rear portion of the blade housing 121. The left interlocking link 113 interlocks the left front swing link 111 with the left rear swing link 112, and the right interlocking link 113 interlocks the right front swing link 111 with the right rear swing link 112. To one of a pair of the right and left front swing links 111,111, a lift cylinder 115 is connected. In addition, a pair of right and left fixed links 110a extending in the front-rear direction is provided so as to connect the rear portion of the blade housing 121 to a rear end portion of the body frame 104.

With the above-mentioned configuration of the link mechanism 110, when one of the front swing links 111 is swingably operated by the lift cylinder 115, a pair of the right and left front swing links 111 are integrally rotated due to the interlocking through a rotating shaft 114 and swingably and vertically moved relative to the body frame 104 while bending at the connecting portion with the front intermediate link 111a, and at the same time, a pair of the right and left rear swing links 112 and the rear intermediate link 112a are vertically and swingably moved. With this configuration, the mower unit 120 is vertically moved between a lowered working state in which ground gauge wheels 125 supported by front and rear portions of the blade housing 121 are grounded and a lifted non-working state in which the ground gauge wheels 125 are lifted up from the ground. During these movements, a displacement in the front-rear direction of the mower unit 120 is regulated by the fixed link 110a. In other words, regardless of the vertical position, a distance between the mower unit 120 and the front wheel 101a is maintained approximately constant, and thus the distance between the mower unit 120 and the front wheel 101a can be made small.

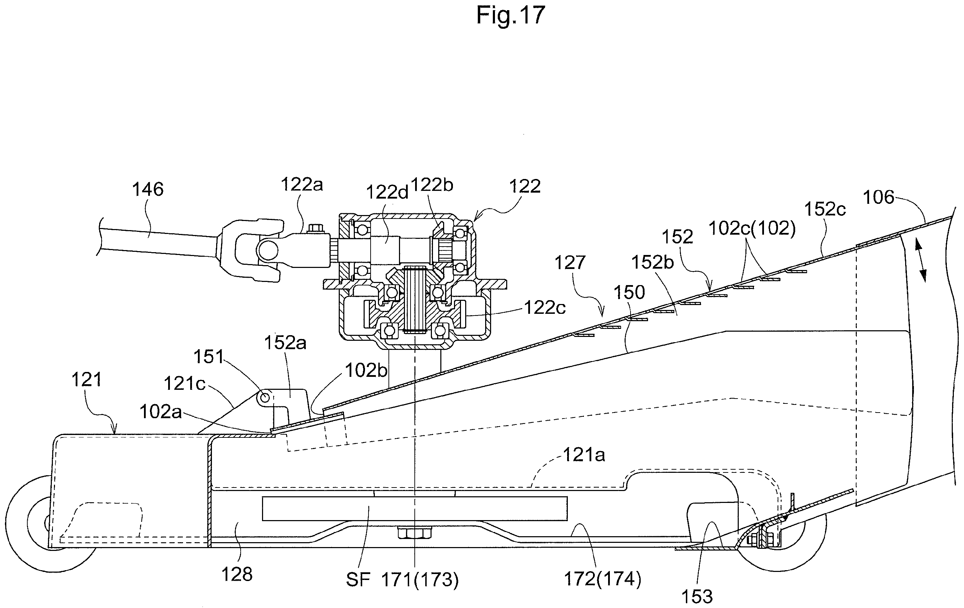

As is apparent from Fig. 17, the blade unit 170 is disposed in the blade housing 121 of the mower unit 120. The blade unit 170 in the present embodiment is of a double-blade type having the first blade 172 and the second blade 174 arranged in the transverse direction relative to the traveling direction. Each of the first blade 172 and the second blade 174 has blowing wings that generate wind by the rotation thereof. The first blade 172 is rotatable about the first axis 171 extending in the vertical direction, and the second blade 174 is rotatable about the second axis 173, by the blade drive mechanism 122.

When the riding type mower travels while the mower unit 120 is put into the lowered working state and the blade unit 170 is driven, mowing is performed by the first blade 172 and the second blade 174. During this mowing, by the wind generated through the rotation of the first blade 172 and the second blade 174, the mown grass is sent to the discharge cover 127 positioned above the blade housing 121, and discharged rearward and upward from the discharge cover 127.

The mown grass discharged from the discharge cover 127 is transferred to a grass-collecting container 132 forming a mown grass collector 130 by an conveying action of the conveying air generated by the first blade 172 and the second blade 174, as well as a guiding action of the conveyance duct 106 which is provided in the self-propelled vehicle and extends in the front-rear direction of the vehicle body between a pair of the right and left rear wheels 101b, and the mown grass is then collected and stored in the grass-collecting container 132.

The mown grass collector 130 has link mechanisms 133 connecting the grass-collecting container 132 and support frames 131 coupled to the body frame 104. By the swingable operation of the link mechanisms 133 with the use of lift cylinders 134, the grass-collecting container 132 is displaced between a lowered collection position and a lifted discharging position.

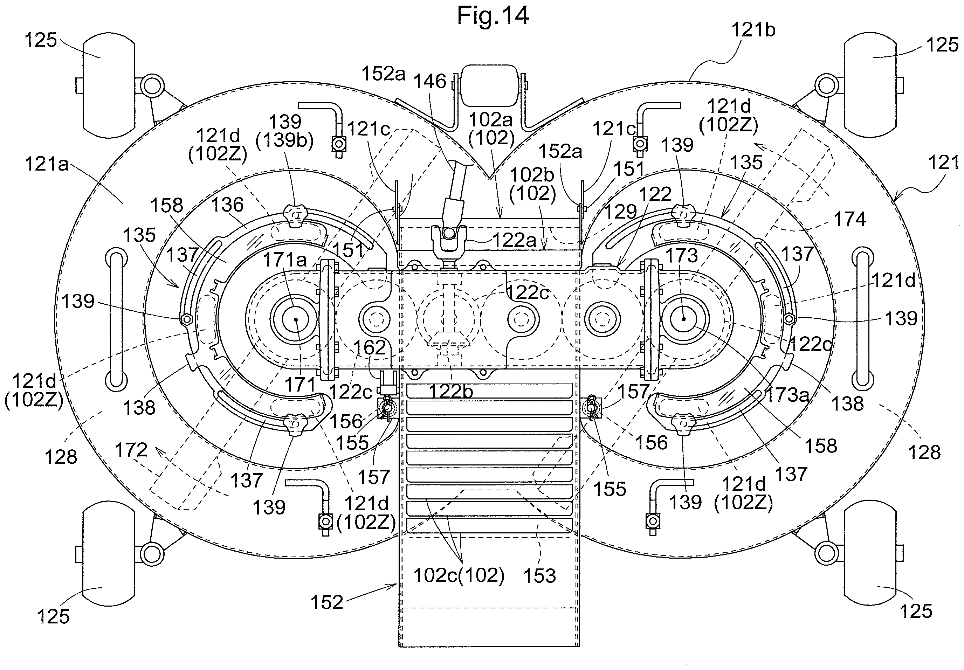

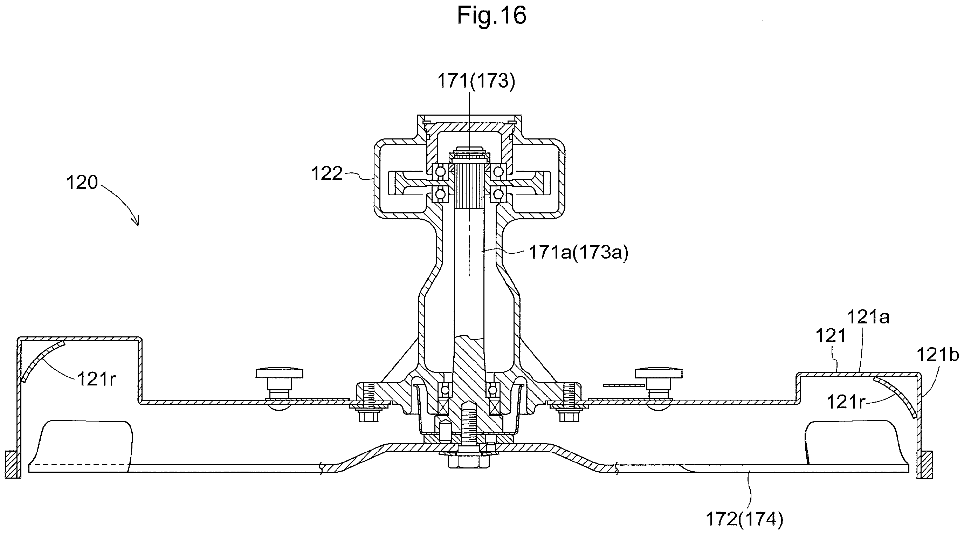

Hereinbelow, the mower unit 120 will be further described in detail with reference to Figs. 14 - 18.

The blade housing 121 of the mower unit 120 includes: the top panel 121a; and the side plate 121b connected to a peripheral edge of the top panel 121a, and the top panel 121a and the side plate 121b form the mowing space 108. Here, since the blade unit 170 of the double-blade type is adopted, the mowing space 108 is divided into a first mowing chamber 181 that accommodates the first blade 172 and a second mowing chamber 182 that accommodates the second blade 174. The first blade 172 is integrally rotatably supported by a first shaft 171a having the first axis 171 penetrating the top panel 121a of the blade housing 121, and the second blade 174 is integrally rotatably supported by a second shaft 173a having the second axis 173 penetrating the top panel 121a of the lade housing 121. The first mowing chamber 181 and the second mowing chamber 182 are arranged side by side in the transverse direction. The blade drive mechanism 122 includes: an input shaft 122a interlocked with the rotary shaft 146; and a bevel gear 122b and flat gears 122c that receive the power from the input shaft 122a and transmit the power to the first shaft 171a and the second shaft 173a (see Fig. 14). Rotational directions of the first blade 172 and the second blade 174 are determined so that the wind flows generated by the rotation of the first blade 172 and the second blade 174 are joined in a space in a boundary region between the first mowing chamber 181 and the second mowing chamber 182 and the joined flow runs rearward and upward.

In the present embodiment, the above-mentioned mown grass pre-discharge region Z2 is the boundary region between the first mowing chamber 181 and the second mowing chamber 182, i.e. a space between the plane extending in the front-rear direction including the first axis 171 and the plane extending in the front-rear direction including the second axis 173 and at the same time an upper region above the plane of the rotation loci of the first blade 172 and the second blade 174. In addition, the air intake region Z1 is a lower region in the mowing space 108 below the plane of the rotation loci.

A portion of the top panel 121a is cut out in the front-rear direction of the vehicle body, with a smaller width in the transverse direction than the width of the mown grass pre-discharge region Z2, to thereby form the mown grass discharge port 129. The first mowing chamber 181 and the second mowing chamber 182 constituting the mowing space 108 are opened to the ground at a lower end portion of the blade housing 121, and communicate with each other at a central portion in the transverse direction of the blade housing 121. The mown grass discharge port 129 communicates with both the first mowing chamber 181 and the second mowing chamber 182. Therefore, mown grass passes from the mown grass pre-discharge region Z2 through the mown grass discharge port 129 by air taken in from the air intake region Z1.

The mown grass that has passed through the mown grass discharge port 129, together with the conveying air generated by the blade unit 170, flows into the mown grass post-discharge region Z3 which is an inner space of the discharge cover 127.

In the present embodiment, as can be understood from Figs. 14, 15, 17 and 18, the discharge cover 127 includes: a lower component 150 provided by fixing metal plates to the blade housing 121 on both lateral sides of the mown grass discharge port 129; and an upper component 152 connected to a pair of right and left support parts 121c provided on a front end portion of the blade housing 121 by respective connecting pieces 152a via respective pivot pins 151. A pair of the right and left lower components 150 constitute right and left lower side walls of the discharge cover 127, respectively, and the upper component 152 constitutes right and left upper side walls and a top wall of the discharge cover 127. A pair of the right and left lower components 150 are provided with a rear guide plate 153 which connects lower portions on a rear end side of the lower components 150 to each other (see Fig. 17).

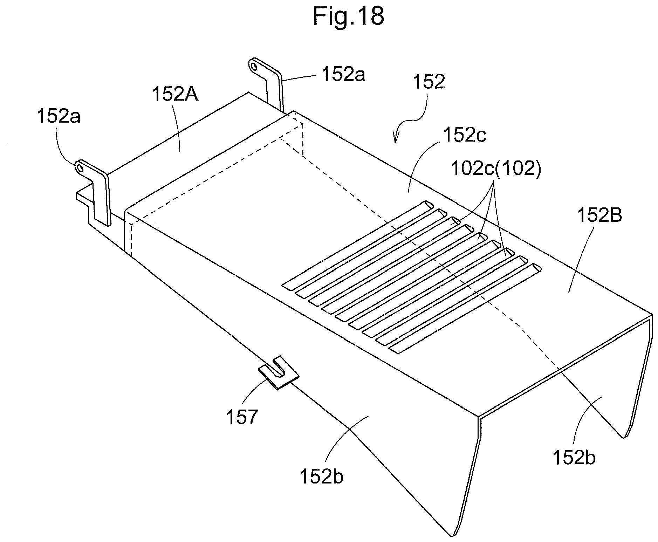

As is apparent from Figs. 17 and 18, the upper component 152 is formed of two bodies divided in the front-rear direction of the vehicle body, including a base end portion 152A and a body part 152B. The base end portion 152A is in a shape of a gate whose height is low, and to both lateral walls thereof, respective connecting pieces 52a are fixed. The body part 152B includes: a pair of right and left lateral side plates 152b; and a top panel 152c contiguous to upper end portions of a pair of the right and left lateral side plates 152b. In addition, the upper component 152 of the discharge cover 127 is supported by the blade housing 121 vertically swingably about a transverse axis formed of axes of a pair of the right and left pivot pins 151,151. In this case, as shown in Fig. 17, the upper component 152 is supported in such a manner that a gap is formed between a front end edge of the base end portion 152A and an upper face of the top panel 121a. This gap, having a slit-shaped cross section extending over almost the entire width of the discharge cover 127, functions as the ambient air intake opening 102a of the intake part 102.

The base end portion 152A and the body part 152B constituting the upper component 152 are welded or joined by bolts at a plurality of appropriate positions, in such a manner that a rear portion of the base end portion 152A and a front portion of the body part 152B are stacked with the body part 152B being positioned above, and that a gap is formed between an upper face of the base end portion 152A and a lower face of the body part 152B. This gap, having a slit-shaped cross section extending over almost the entire width of the discharge cover 127, functions as the ambient air intake opening 102b of the second intake part 102. In other words, the second intake part 102 is formed by the upper face of the rear portion of the base end portion 152A and the lower face of the front portion of the body part 152B. As can be easily understood from Fig. 17, the ambient air intake opening 102a is positioned upstream of the ambient air intake opening 102b in the mown grass flow direction, and the former is positioned lower than the latter. Further, with respect to the length in the transverse direction of the flow cross section, the ambient air intake opening 102a and the ambient air intake opening 102b are almost the same, while with respect to the length in a height direction of the flow cross section, the ambient air intake opening 102b is larger than the ambient air intake opening 102a.

With the above-mentioned configuration of the discharge cover 127, the mown grass discharged from the mown grass discharge port 129 is fluidly guided rearward and upward and sent to the conveyance duct 106, by means of the conveying air whose volume is increased by the ambient air sucked in from the ambient air intake openings 102a and 102b of intake part 102 provided in the discharge cover 127.

It is noted that, in the present embodiment, the top panel 152c of the body part 152B of the upper component 152 may be additionally provided with a plurality of slit-like through-holes which extend in the transverse direction and are arranged in the front-rear direction of the vehicle body at intervals, as the ambient air intake openings 102c of the intake part 102, as can be seen in Figs. 17 and 18. By providing a cut in a squared U-shape in the top panel 152c of the body part 152B and folding an elongated tongue piece formed thereby to an inner side, the ambient air intake opening 102c is formed between the tongue piece and the remaining portions of the top panel 152c. The tongue piece functions as an air guide face.

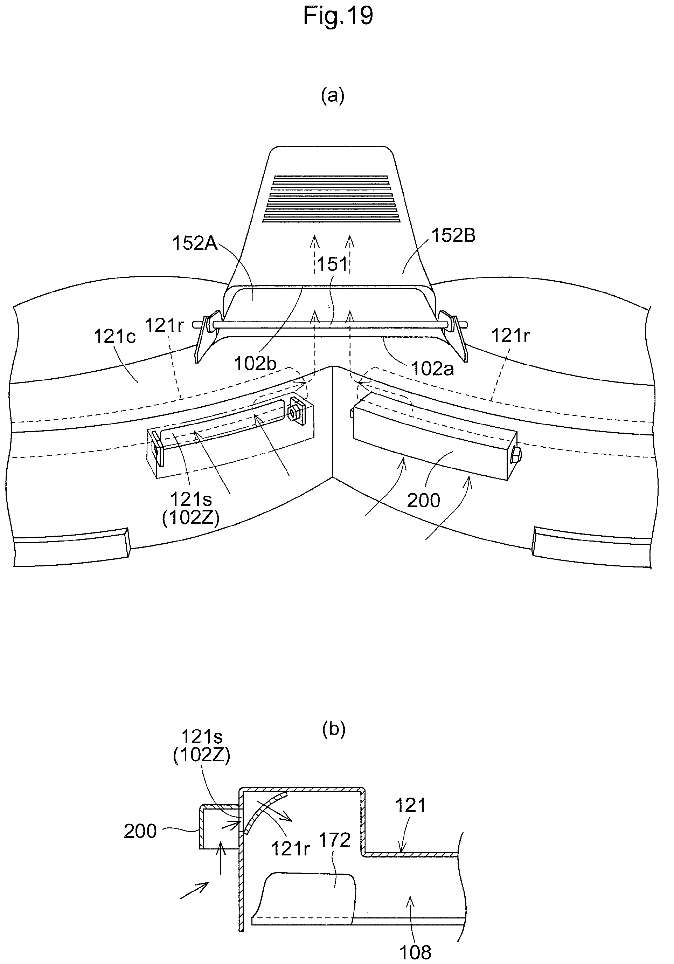

Further in the present embodiment, as shown in Fig. 19, the fourth intake part 102 is provided in the side plate 121b on a front side of the blade housing 121 and in the vicinity of the top panel 121a. It is noted that in most region of a corner portion formed by the top panel 121a and the side plate 121b of the blade housing 121, a curved plate 121r is fixed whose curvature is projecting toward the corner portion. With this configuration, a face of the curved plate 121r facing the mowing space 108 is a concavely curved inner face, and thus mown grass flows smoothly and is prevented from sticking. The curved plate 121r, the top panel 121a and the side plate 121b define an annular corner space having an approximately triangular cross section. In a front central region of the blade housing 121 shown in Fig. 19, a portion of the curved plate 121r is lacking, and in end portions of the left and right curved plates 121r, an opening of the annular corner space is formed.

An ambient air intake opening 121s of the fourth intake part 102 is a through-hole which is formed in the side plate 121b and elongated in the transverse direction. The ambient air intake opening 121s is opened to the annular corner space. Accordingly, air from the ambient air intake opening 121s passes through the annular corner space, and flows from the opening of the annular corner space into a front region of the mown grass pre-discharge region Z2. In Fig. 19, only one of the ambient air intake openings 121s is provided with an eaves-like cover (eaves member) 200 which extends downward and covers the ambient air intake opening 121s, but this is merely for the descriptive purpose, and both of the ambient air intake openings 121s are actually provided with the respective eaves-like covers 200. The eaves-like cover 200 has such an inner shape that a gap is formed between a lower edge of the eaves-like cover 200 and the side plate 121b, and a communication space is formed between the gap and the ambient air intake opening 121s. With this eaves-like cover 200, foreign matters are prevented from entering the annular corner space directly from above through the ambient air intake opening 121s.

As shown in Fig. 12, the blade housing 121 has rod-shaped spring holders 155 standing on both lateral sides of the upper component 152 and fixed to the top panel 121a, and lift operation springs 156 each formed of a coil spring supported on the corresponding spring holder 155. Each lift operation spring 156 is configured to be slidably fitted on the spring holder 155 and act on a spring receiver 157 provided on the lateral side plate 152b of the upper component 152 (see Fig. 18) to thereby upward urge the upper component 152 about the axis of the pivot pin 151 (see Fig. 17).

In other words, in the discharge cover 127, regardless of the change in the vertical interval between the blade housing 121 and the conveyance duct 106 caused by the vertical movement of the mower unit 120 relative to the self-propelled vehicle body, a rear end side of the upper component 152 remains in contact with an inner face of the conveyance duct 106 by upward urging of the lift operation spring 156 provided on the upper component 152. With this configuration, mown grass discharged from the mown grass discharge port 129 is sent to the conveyance duct 106 without leaking from between the discharge cover 127 and the conveyance duct 106.

Further, on an outer side face of the left lower component 150, a hook-shaped lock fitting 162 is provided that is rotatable about a fulcrum shaft 161. By downward pushing the upper component 152 and locking the lock fitting 162 to the spring receiver 157, the top panel 152c of the upper component 152 can be retained in a lowered posture. With this configuration, the upper component 152 can be removed without causing interference with the conveyance duct 106.

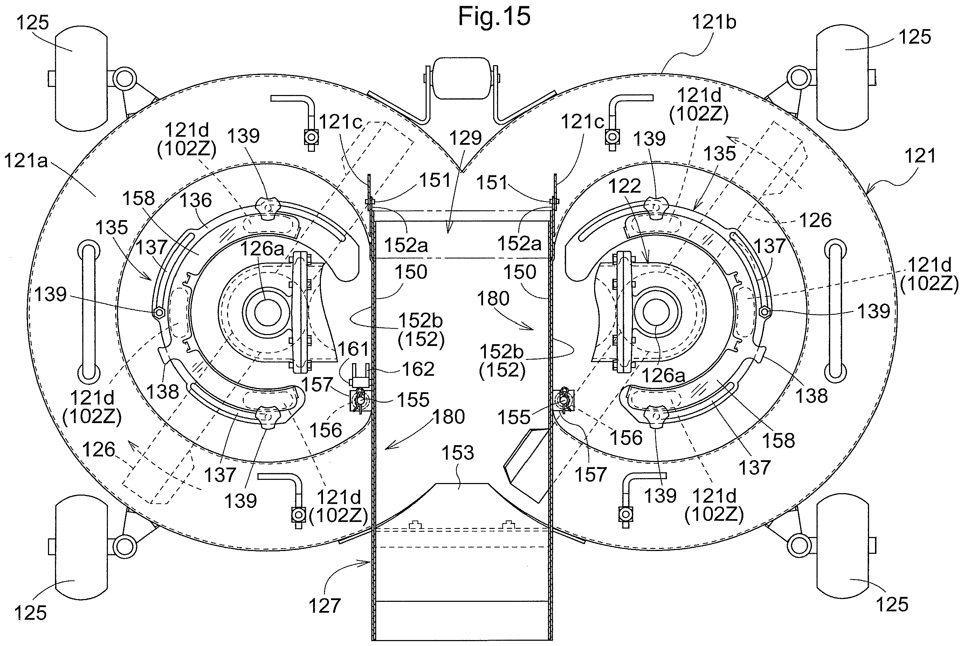

In the present embodiment, as is apparent from Fig. 15, the top panel 121a is provided with auxiliary ambient air intake openings 121d that function as ambient air intake openings of an auxiliary intake part 2Z. The auxiliary ambient air intake openings 121d are formed in the top panel 121a of the blade housing 121, on a circumference having a diameter of approximately 1/2 of the diameter of the first blade 172 with the first axis 171 as a center, and on a circumference having a diameter of approximately 1/2 of the diameter of the second blade 174 with the second axis 173 as a center. Moreover, it is important that, in order to prevent the conflict with the intake part 102 having the ambient air intake opening 102a, the auxiliary ambient air intake opening 121d is positioned so as to be opened to the mowing space 108 other than the mown grass pre-discharge region Z2. In other words, air supply to the conveying air (air flow) that has flowed into the mown grass post-discharge region Z3 from the mown grass discharge port 129 is performed via the ambient air intake opening 102a of the intake part 102.

The auxiliary ambient air intake opening 121d is provided with an opening adjuster 135 for adjusting a degree of opening of the auxiliary ambient air intake opening 121d. The opening adjuster 135 includes: an opening adjustment plate 136 having an opening in the same shape as that of the auxiliary ambient air intake opening 121d; a guide hole 137 for determining an opening/closing direction of the opening adjustment plate 136; an operation knob 138 as an operation part; and a metal fitting 139 formed of a screw. Further, above the auxiliary ambient air intake opening 121d, a cover 158 made of transparent resin is provided, and the operation knob 138 is integrally formed with the cover 158. The cover 158 is provided to the opening adjustment plate 136 with an interval of approximately 1 cm between a lower face of the cover 158 and an upper face of the opening adjustment plate 136 so as not to block the flow of air into the auxiliary ambient air intake opening 121d. The top panel 121a of the blade housing 121 has a plurality of the auxiliary ambient air intake openings 121d, and the cover 158 covers from above a plurality of the auxiliary ambient air intake openings 121d spaced apart from the top panel 121a. With this configuration, foreign matters are prevented from entering through the auxiliary ambient air intake opening 121d.

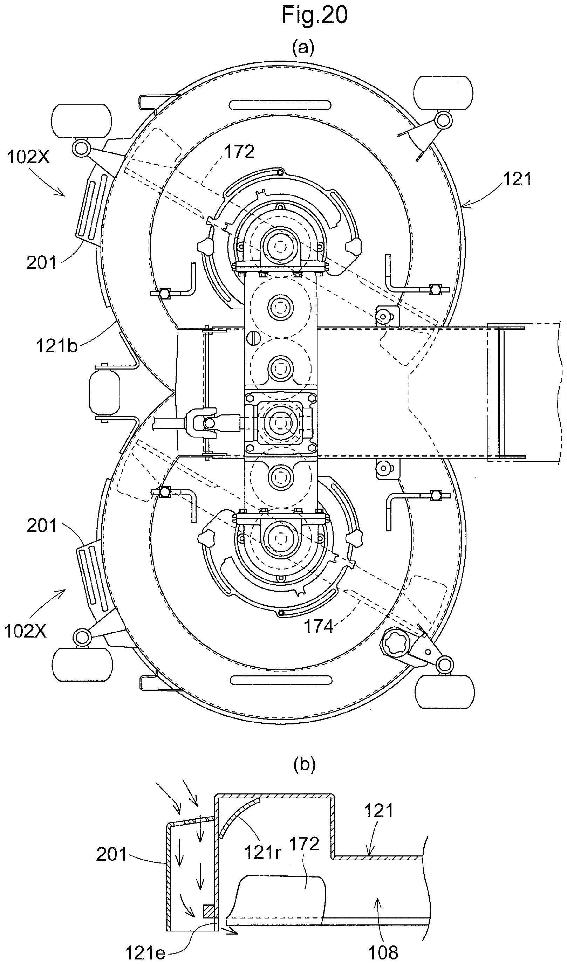

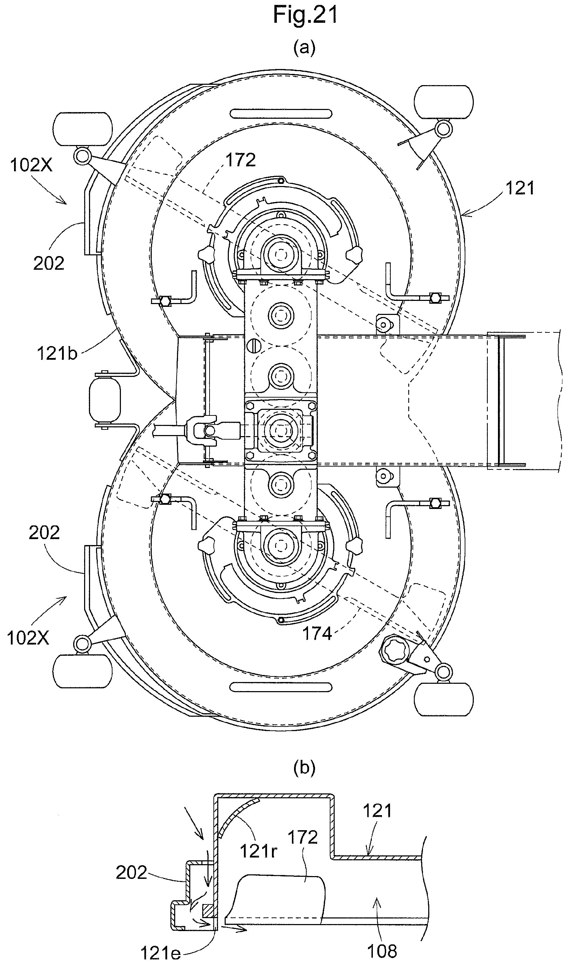

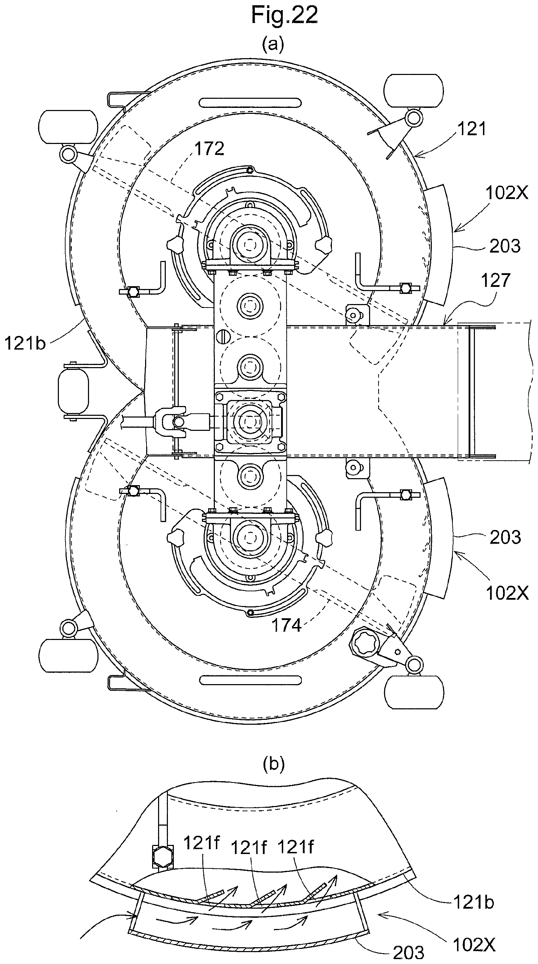

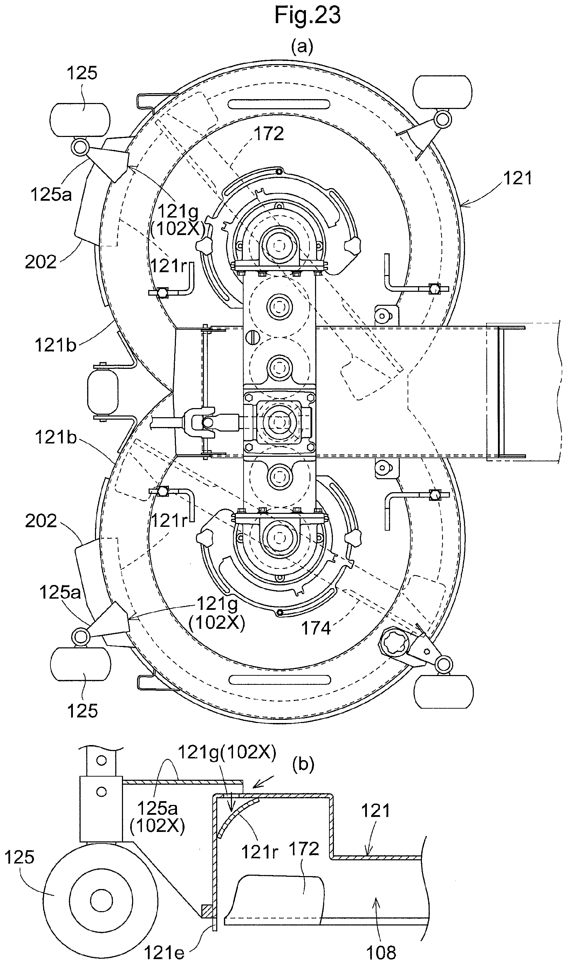

Though not described in the present embodiment, the blade housing 121 may be provided with an auxiliary intake part 2X that plays an auxiliary role for the intake part 102. Examples of such auxiliary intake parts 2X are as follows.
(1) The auxiliary intake parts 2X shown in Fig. 20 are provided in both end portions of the front face of the side plate 121b. A lower end region of each of these end portions is cut out, and the cutout portion functions as an auxiliary ambient air intake opening 121e of the auxiliary intake part 2X. It is noted that the auxiliary ambient air intake opening 121e is surrounded by a cover 201 with a hole, for the purpose of preventing the intrusion of foreign matters from the auxiliary ambient air intake opening 121e. The cover 201 includes an upper face part and a side face part, and the upper face part is provided with a slit that allows air to flow. The cover 201 with a hole is screwed to the side plate 121b so as to project from the side plate 121b and form a space inside. With this configuration, the slit in the upper face part communicates with the auxiliary ambient air intake opening 121e, and air is allowed to flow between the air intake region Z1 in the mowing space 108 of the blade housing 121 and outside.
(2) The auxiliary intake part 2X shown in Fig. 21 is similar to the auxiliary intake part 2X shown in Fig. 20. Likewise, the lower end region of the side plate 121b has a cutout portion as the auxiliary ambient air intake opening 121e, but in this case, a cover member 202 surrounding the cutout portion does not have a slit, and instead a recess is formed that creates a slit-shaped gap between the cover member 202 and the side plate 121b.
(3) The auxiliary intake parts 2X shown in Fig. 22 are provided in the rear face of the side plate 121b and positioned on right and left sides across the discharge cover 127. Herein, by providing three cuts each in a squared U-shape in a central portion of the side plate 121b, and folding tongue pieces formed thereby to an inner side, openings are formed between the tongue piece and the remaining portions of the side plate 121b. These openings function as auxiliary ambient air intake openings 121f of the auxiliary intake part 2X. The tongue functions as an air guide face. The auxiliary ambient air intake opening 121f is also surrounded by a cover 203 fixed to the side plate 121b with a bolt and a spacer while retaining a gap from a surface of the side plate 121b. With this configuration, the gap between the side plate 121b and the cover 203 communicates with the auxiliary ambient air intake opening 121f, and air is allowed to flow between the mowing space 108 of the blade housing 121 and outside.
(4) The auxiliary intake part 2X shown in Fig. 23 is formed in a gap between a gauge wheel bracket 125a for mounting the ground gauge wheel 125 and the top panel 121 a of the blade housing 121. An auxiliary intake opening 121 g of the auxiliary intake part 2X is a through-hole which is provided in the top panel 121a and communicates with a gap between the gauge wheel bracket 125a and the top panel 121a. It is noted that in the vicinity of the gauge wheel bracket 125a, the auxiliary intake part 2X may be formed in the lower end region of the side plate 121b so that the cutout portion serves as the auxiliary ambient air intake opening 121e, like those described with reference to Fig. 21. It is also noted that the cutout portion (auxiliary ambient air intake opening 121e) extends to a running locus area of the ground gauge wheel 125, and can be covered with the cover member 202. The cutout portion (auxiliary ambient air intake opening 121e) is cut up to the height of the blade 172, and accordingly, the posture of grass to be mown is improved (grass does not sink down to the ground), and unmown grass can be reduced.

When the blade unit 170 is adopted in which the conveying air is generated by rotary drive, there may be cases where noise becomes large, such as wind noise by the blade and passing noise at the air intake portion. Such noise has a certain frequency, and thus the noise can be reduced by utilizing a principle of active noise control. Specifically, the blade housing 121, the discharge cover 127, and/or the conveyance duct 106 is provided with a resonator which takes in noise and emits a sound wave with the same frequency as that of the noise, at a delay of a half-wavelength. For example, a U-shaped pipe having an intake port of the conveying air (noise) and a discharge port of the conveying air (sound for noise-cancelling) is introduced so that the intake port and the discharge port are opened to the space through which the conveying air passes. The U-shaped pipe is designed so that the frequency of the conveying air emitted from the discharge port is shifted by a half-wavelength from the frequency of the conveying air taken in from the intake port.

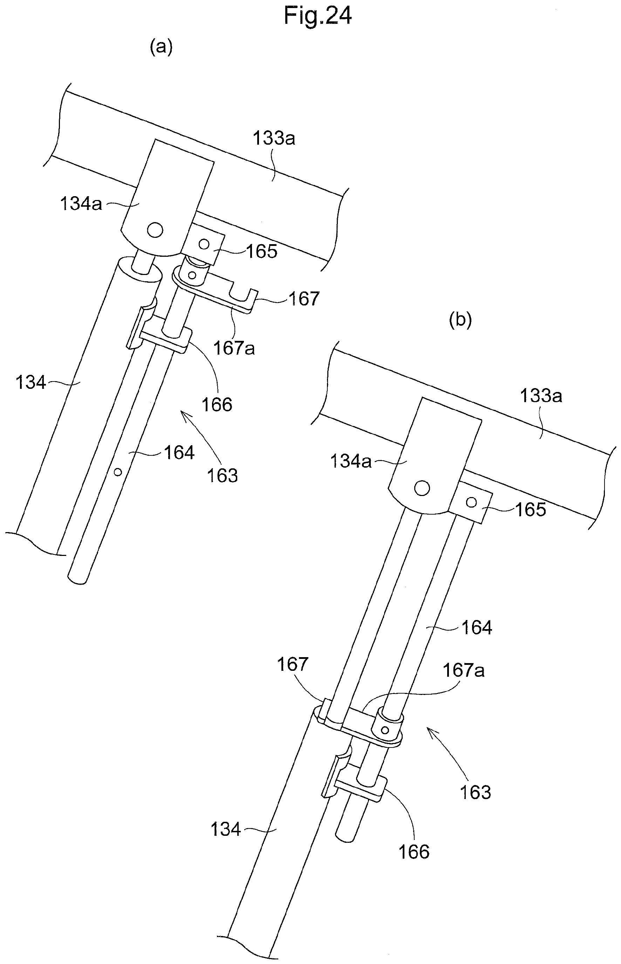

Though not shown in Fig. 12, the lift cylinder 134 for swinging the link mechanism 133 of the mown grass collector 130 is provided with a cylinder guard 163, as schematically shown in Fig. 24. The cylinder guard 163 is provided with a lock function for locking the expanded lift cylinder 134 during the maintenance and inspection. The cylinder guard 163 includes a rod-shaped guard body 164, a fixing bracket 165, a guide part 166, and a hook 167. The fixing bracket 165 is fixed to a cylinder bracket 134a which couples a piston of the lift cylinder 134 to a lower link 133a of the link mechanism 133. One end of the guard body 164 is fixed to the fixing bracket 165. The guide part 166 has a hole allowing the guard body 164 to be inserted, and is fixed to the lift cylinder 134. The hook 167 has a hole allowing the guard body 164 to be inserted, and is slidable along the guard body 164 between the fixing bracket 165 and the guide part 166. The hook 167 is rotatable about the guard body 164 and has a hook arm 167a in which a hook recess is formed that is engageable with the piston of the lift cylinder 134 at a predetermined rotational position. Further, the hook 167 has a lock pin for fixing the hook 167 to the guard body 164 at a predetermined slide position (in the present case, a position where the lift cylinder 134 is expanded to the maximum). With this configuration, the cylinder guard 163 protects the piston of the lift cylinder 134 and locks the movement of the lift cylinder 134, by fitting the hook recess of the hook arm 167a onto the piston of the lift cylinder 134 expanded to the maximum.

### [Third embodiment]

Hereinbelow, an embodiment of the present invention will be described with reference to the drawings.

### [First mode]

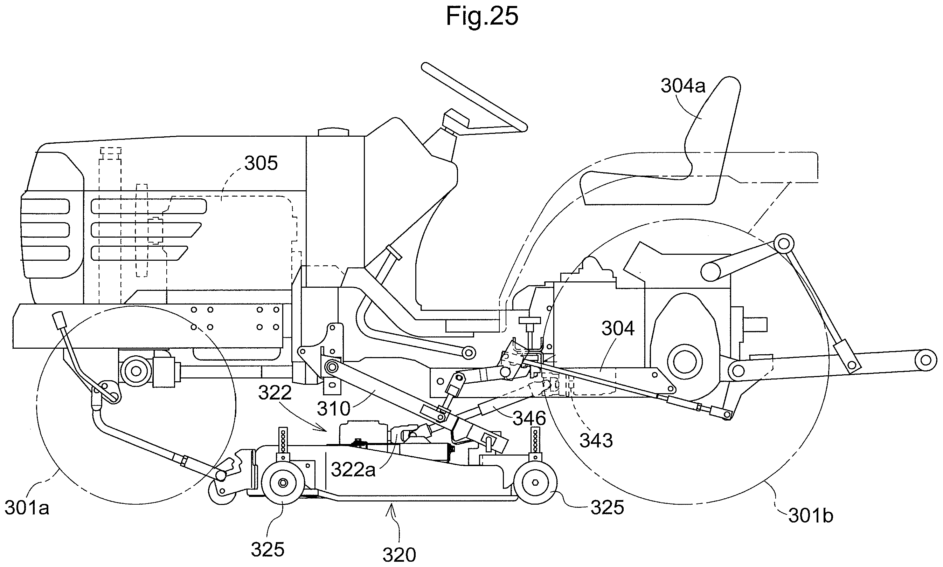

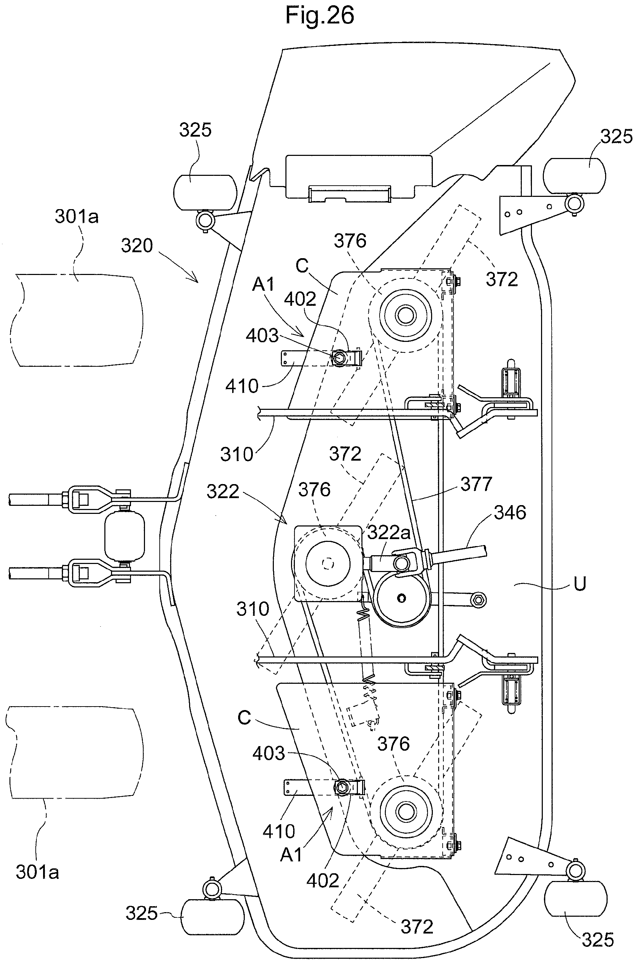

A first mode of the present invention will be described. The fastening structure according to the present invention is provided to, for example, a riding type mower. As shown in Figs. 25 and 26, the riding type mower is self-propelled by a pair of right and left steerable front wheels 301a and a pair of right and left drivable rear wheels 301b. A driving part including a driver's seat 304a is disposed in a rear half portion of a body frame 304 of the riding type mower. In a region between the front wheels 301a and the rear wheels 301b, a mower unit 320 is suspended from the body frame 304 via a link mechanism 310. In a front half portion of the body frame 304, an engine 305 is mounted via a rubber.

The mower unit 320 is configured in such a manner that, by driving the link mechanism 310, ground gauge wheels 325 vertically move between a lowered working state in which the ground gauge wheels 325 are grounded and a lifted non-working state in which the ground gauge wheels 325 are lifted up from the ground.

The power of the engine 305 is transmitted through a power taking-out shaft 343 to a blade drive mechanism 322. The blade drive mechanism 322 includes: a rotary shaft 346 to which the power is transmitted from the power taking-out shaft 343; an input shaft 322a interlocked with the rotary shaft 346; a plurality of pulleys 376 (one example of "rolling body") rotatable by the power transmitted to the input shaft 322a; and a belt 377 (one example of "rolling body") wound around the pulleys 376. The blades 372 are attached to the respective pulleys 376 in a unified manner. In other words, when the pulleys 376 and the belt 377 rotate by the power from the engine 305, the blades 372 are rotatively driven and grass is mown.

The blades 372 are disposed under a covered member U as a blade housing. The blade drive mechanism 322 is disposed above the covered member U. Also above the covered member U, there is provided a cover member C that covers from above the "rolling body", such as the pulley 376 and the belt 377, provided in the blade drive mechanism 322. The cover member C is removably fixed to the covered member U by a fastening structure A1 shown in Figs. 26 - 28.

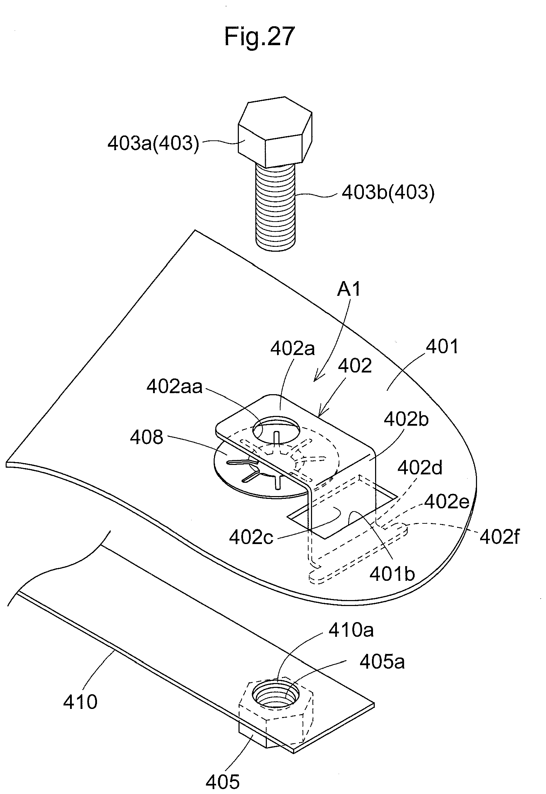

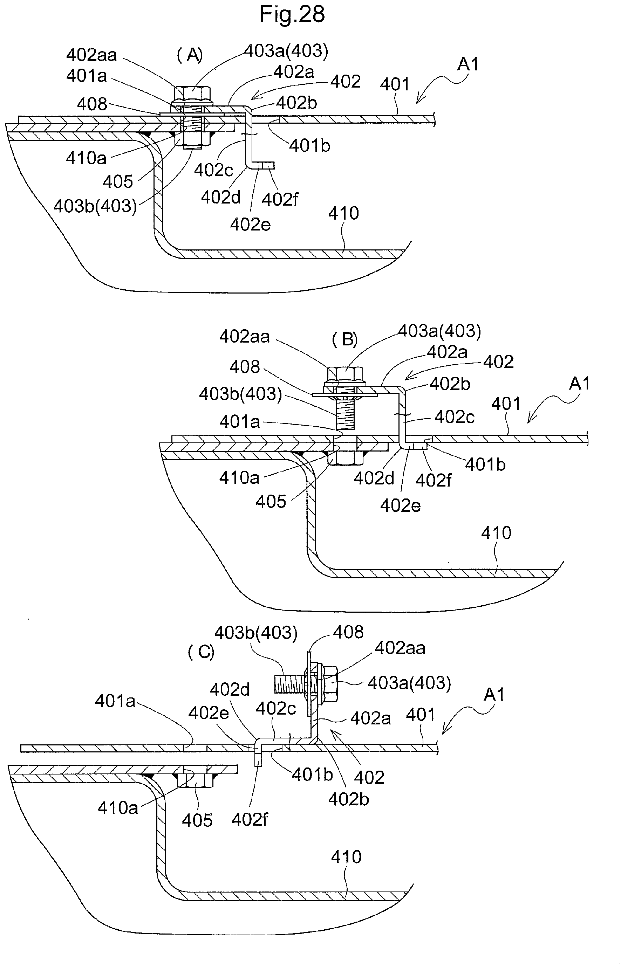

Hereinbelow, the fastening structure A1 of the first mode, in particular those shown in Figs. 27 and 28, will be described. It is noted that, in the following description, the cover member C is referred to as "first member", and the covered member U is referred to as "second member".

Referring to Figs. 27 and 28, the fastening structure A1 includes: a retaining member 402; a male screw member 403; a first insertion part 401a formed in a first member 401; a female screw member 405; a through part 401b formed in the first member 401; a broad portion 402f (one example of "first slip-off prevention part"); and a second slip-off prevention part 408 formed of, for example, a slip-off prevention washer.

The retaining member 402 is a rigid body formed of a single flat plate bent in a Z-shape. The retaining member 402 includes: a mount portion 402a positioned at one end portion of the retaining member 402; a first bent portion 402b; a slide part 402c positioned at an intermediate portion of the retaining member 402; a second bent portion 402d; and an extension part 402e positioned at the other end portion of the retaining member 402.

The male screw member 403 includes: a head 403a; and a male screw shaft part 403b extending from the head 403a.

A second member 410 has a third insertion part 410a into which the male screw shaft part 403b of the male screw member 403 is inserted. A diameter of the third insertion part 410a is made larger than a nominal diameter of the male screw shaft part 403b.

The mount portion 402a of the retaining member 402 has a second insertion part 402aa into which the male screw shaft part 403b is inserted. A diameter of the second insertion part 402aa is made larger than the nominal diameter of the male screw shaft part 403b.

The second slip-off prevention part 408 is fixed to a portion of the male screw shaft part 403b on the side opposite to the head 403a relative to the second insertion part 402aa. An outer diameter of the second slip-off prevention part 408 is made larger than the diameter of the second insertion part 402aa.

As described above, the male screw member 403 can be rotatably held by the mount portion 402a which is one end portion of the retaining member 402. The male screw member 403 held by the mount portion 402a cannot pass the through part 401b.

The first bent portion 402b is bent at approximately right angle relative to the mount portion 402a which is one end portion of the retaining member 402.

The slide part 402c is a portion extending from the first bent portion 402b. A dimension of the slide part 402c is made smaller than that of the through part 401b. The slide part 402c penetrates the through part 401b. In other words, the retaining member 402 penetrates the through part 401b. The slide part 402c is configured to slide in the through part 401b. The slide part 402c also extends in an axial direction of the male screw member 403. Simply put, the retaining member 402 is configured to slide in the axial direction of the male screw member 403 by utilizing the through part 401b. A length of the slide part 402c is made larger than a length of a portion of the male screw shaft part 403b projecting from the mount portion 402a.

The second bent portion 402d is a portion bent at approximately right angle relative to the slide part 402c, at the other end of the slide part 402c. From the second bent portion 402d, the extension part 402e extends. The second bent portion 402d is bent in such a manner that the extension part 402e extends away from the mount portion 402a which is one end portion of the retaining member 402.

The broad portion 402f is positioned on the side opposite to the mount portion 402a which is one end portion of the retaining member 402, relative to the through part 401b. To put it another way, the broad portion 402f is disposed on a distal end of the extension part 402e extending away from the male screw member 403, on the other end side of the retaining member 402. The broad portion 402f is a rigid body integrally formed with the retaining member 402. The broad portion 402f has a width larger than a width of the slide part 402c. A longitudinal width of the broad portion 402f is set larger than a longitudinal width of the through part 401b. Therefore, the broad portion 402f cannot pass the through part 401b and prevents the retaining member 402 from being detached from the first member 401.

The first insertion part 401a is a bore formed in the first member 401. Into the first insertion part 401a, the male screw shaft part 403b of the male screw member 403 is inserted. A diameter of the first insertion part 401a is made larger than the nominal diameter of the male screw shaft part 403b.

The female screw member 405 is fixed to the second member 410. The female screw member 405 has a female screw hole 405a. The male screw member 403 and the female screw member 405 can be fastened by screwing forward the male screw shaft part 403b of the male screw member 403 into the female screw hole 405a of the female screw member 405. Conversely, the fastening of the male screw member 403 and the female screw member 405 can be released by screwing backward the male screw shaft part 403b of the male screw member 403 from the female screw hole 405a of the female screw member 405.

As shown in Fig. 28(A), while the slide part 402c of the retaining member 402 is guided along the axial direction of the male screw member 403 by utilizing the through part 401b of the first member 401, the male screw member 403 is screwed forward to be fastened to the female screw member 405 provided on the second member 410, to thereby fix the first member 401 to the second member 410. In a state where the male screw member 403 and the female screw member 405 are fastened, the mount portion 402a is brought into substantially close contact with the first member 401. In this state, from among the portions of the retaining member 402, only the mount portion 402a, the first bent portion 402b and a portion of the slide part 402c are exposed on an outer side of the first member 401. To put it another way, in this state, a portion of the slide part 402c, the second bent portion 402d, the extension part 402e and the broad portion 402f are hidden on an inner side of the first member 401 and are hard to be seen from outside. Accordingly, an outer appearance of the first member 401 can be made excellent.

As shown in Fig. 28(B), when the first member 401 and the second member 410 are to be removed from each other, while the slide part 402c of the retaining member 402 is guided along the axial direction of the male screw member 403 by utilizing the through part 401b of the first member 401, the male screw member 403 is screwed backward to release the fastening with the female screw member 405 provided on the second member 410, and is pulled out from the third insertion part 410a and the first insertion part 401a. During this action, since the broad portion 402f cannot pass the through part 401b, the retaining member 402 is not detached from the first member 401. Accordingly, the male screw member 403 held by the retaining member 402 is not detached from the first member 401. Therefore, the male screw member 403 can be suitably prevented from being lost when the first member 401 is removed from the second member 410.

In addition, as shown in Fig. 28(C), since the retaining member 402 is bent in a Z-shape, when the mount portion 402a which is one end portion of the retaining member 402 is tilted away from the first insertion part 401a with a vicinity of the second bent portion 402d as a center, the slide part 402c can be supported by an outer face of the first member 401. Accordingly, the mount portion 402a of the retaining member 402 is put in a standing posture on the outer face of the first member 401, and thus the male screw member 403 whose fastening is released can be easily distinguished based on the appearance thereof.

It is preferable that the fastening structure A1 is introduced to, for example, a horizontal portion in the first member 401.

### [Second mode]

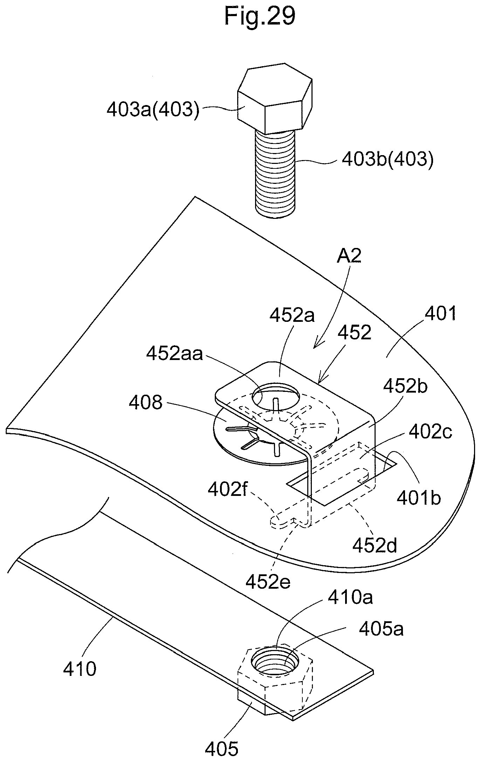

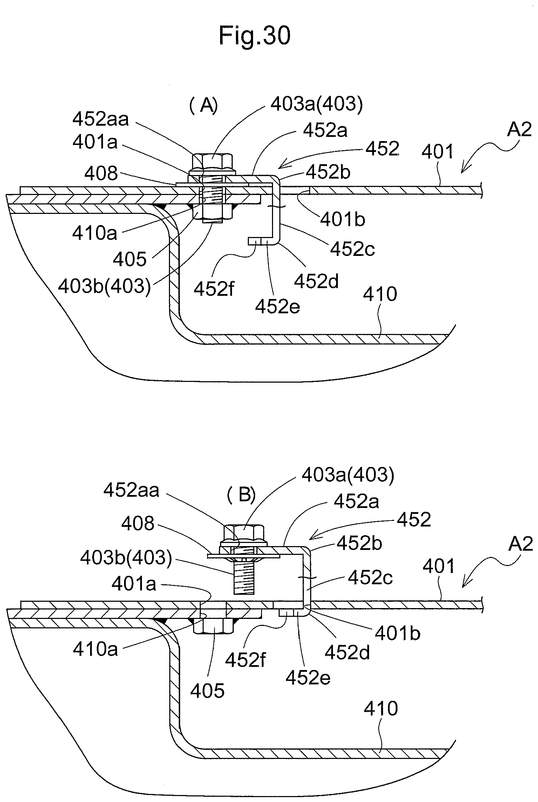

Hereinbelow, a second mode of the present invention will be described. A fastening structure A2 of the second mode shown in Figs. 29 and 30 is different from the fastening structure A1 of the first mode in that, mainly, the retaining member 402 in the fastening structure A1 is replaced with a retaining member 452. The arrangement of the fastening structure A2 is the same as that of the fastening structure A1, except for the matters that will be described below.

Referring to Figs. 29 and 30, the fastening structure A2 includes: the retaining member 452; the male screw member 403; the first insertion part 401a formed in the first member 401; the female screw member 405; the through part 401b formed in the first member 401; a broad portion 452f (one example of "first slip-off prevention part"); and the second slip-off prevention part 408.

The retaining member 452 is a rigid body formed of a single flat plate bent in a squared C-shape. The retaining member 452 includes: a mount portion 452a positioned at one end portion of the retaining member 452; a first bent portion 452b; a slide part 452c positioned at an intermediate portion of the retaining member 452; a second bent portion 452d; and an extension part 452e positioned at the other end portion of the retaining member 452.

The second bent portion 452d is bent in such a manner that the extension part 452e extends on a side closer to said one end portion of the retaining member 452.

The mount portion 452a of the retaining member 452 has a second insertion part 452aa into which the male screw shaft part 403b is inserted. A diameter of the second insertion part 452aa is made larger than the nominal diameter of the male screw shaft part 403b.

The second slip-off prevention part 408 is formed of, for example a slip-off prevention washer, and is fixed to a portion of the male screw shaft part 403b of the male screw member 403 on the side opposite to the head 403a relative to the second insertion part 452aa. The outer diameter of the second slip-off prevention part 408 is made larger than the diameter of the second insertion part 452aa.

As described above, the male screw member 403 can be rotatably held by the mount portion 452a which is one end portion of the retaining member 452. The male screw member 403 held by the mount portion 452a cannot pass the through part 401b.

The first bent portion 452b is bent at approximately right angle relative to the mount portion 452a which is one end portion of the retaining member 452.

The slide part 452c is a portion extending from the first bent portion 452b. A dimension of the slide part 452c is made smaller than that of the through part 401b. The slide part 452c penetrates the through part 401b. In other words, the retaining member 452 penetrates the through part 401b. The slide part 452c is configured to slide in the through part 401b. The slide part 452c also extends in the axial direction of the male screw member 403. Simply put, the retaining member 452 is configured to slide in the axial direction of the male screw member 403 by utilizing the through part 401b. A length of the slide part 452c is made larger than a length of a portion of the male screw shaft part 403b projecting from the mount portion 452a.

The second bent portion 452d is a portion bent at approximately right angle relative to the slide part 452c, at the other end of the slide part 452c. From the second bent portion 452d, the extension part 452e extends. The second bent portion 452d is bent in such a manner that the extension part 402e extends on a side closer to the mount portion 452a which is one end portion of the retaining member 452.

The broad portion 452f is positioned on the same side as the mount portion 452a which is one end portion of the retaining member 452, relative to the through part 401b. Specifically, the broad portion 452f is disposed on a distal end of the extension part 452e extending on a side closer to the male screw member 403, on the other end side of the retaining member 452. The broad portion 452f is a rigid body integrally formed with the retaining member 452. The broad portion 452f has a width larger than a width of the slide part 452c. A longitudinal width of the broad portion 452f is set larger than a longitudinal width of the through part 401b. Therefore, the broad portion 452f cannot pass the through part 401b and prevents the retaining member 452 from being detached from the first member 401.

As shown in Fig. 30(A), while the slide part 452c of the retaining member 452 is guided along the axial direction of the male screw member 403 by utilizing the through part 401b of the first member 401, the male screw member 403 is screwed forward to be fastened to the female screw member 405 provided on the second member 410, to thereby fix the first member 401 to the second member 410. In a state where the male screw member 403 and the female screw member 405 are fastened, the mount portion 452a is brought into substantially close contact with the first member 401. In this state, from among the portions of the retaining member 452, only the mount portion 452a, the first bent portion 452b and a portion of the slide part 452c are exposed on the outer side of the first member 401. To put it another way, in this state, a portion of the slide part 452c, the second bent portion 452d, the extension part 452e and the broad portion 452f are hidden on the inner side of the first member 401 and are hard to be seen from outside. Accordingly, the outer appearance of the first member 401 can be made excellent.

As shown in Fig. 30(B), when the first member 401 and the second member 410 are to be removed from each other, while the slide part 452c of the retaining member 452 is guided along the axial direction of the male screw member 403 by utilizing the through part 401b of the first member 401, the male screw member 403 is screwed backward to release the fastening with the female screw member 405 provided on the second member 410, and is pulled out from the third insertion part 410a and the first insertion part 401a. During this action, since the broad portion 452f cannot pass the through part 401b, the retaining member 452 is not detached from the first member 401. Accordingly, the male screw member 403 held by the retaining member 452 is not detached from the first member 401. Therefore, the male screw member 403 can be suitably prevented from being lost when the first member 401 is removed from the second member 410.

It is preferable that the fastening structure A2 is introduced to, for example, a perpendicular portion in the first member 401.

### [Third mode]

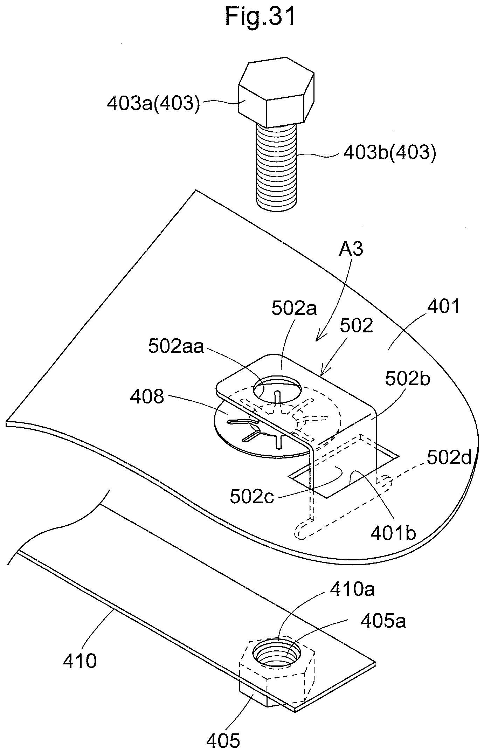

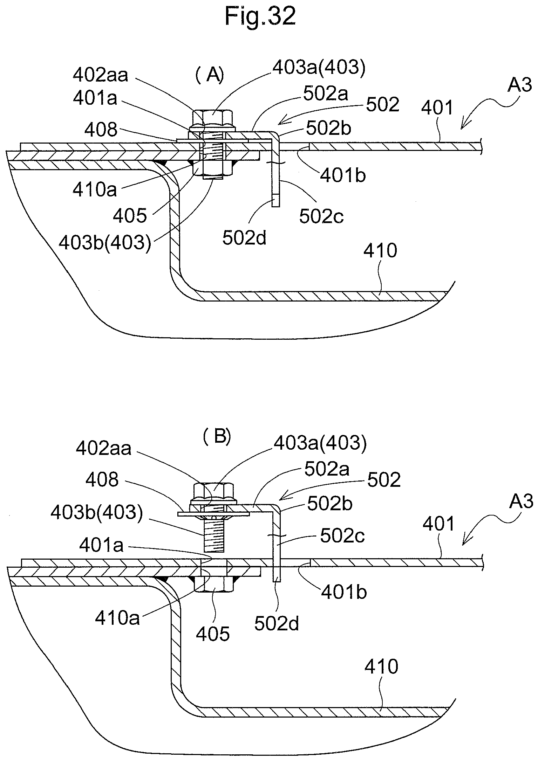

Hereinbelow, a third mode of the present invention will be described. A fastening structure A3 of the third mode shown in Figs. 31 and 32 is different from the fastening structure A1 of the first mode in that, mainly, the retaining member 402 in the fastening structure A1 is replaced with a retaining member 502. The arrangement of the fastening structure A3 is the same as that of the fastening structure A1, except for the matters that will be described below.

Referring to Figs. 31 and 32, the fastening structure A3 includes: the retaining member 502; the male screw member 403; the first insertion part 401a formed in the first member 401; the female screw member 405; the through part 401b formed in the first member 401; a broad portion 502d (one example of "first slip-off prevention part"); and the second slip-off prevention part 408.

The retaining member 502 is a rigid body formed of a single flat plate bent in an L-shape. The retaining member 502 includes: a mount portion 502a positioned at one end portion of the retaining member 502; a first bent portion 502b; and a slide part 502c positioned at the other end portion of the retaining member 502.

The mount portion 502a of the retaining member 502 has a second insertion part 502aa into which the male screw shaft part 403b is inserted. A diameter of the second insertion part 502aa is made larger than the nominal diameter of the male screw shaft part 403b.

The second slip-off prevention part 408 is fixed to a portion of the male screw shaft part 403b on the side opposite to the head 403a relative to the second insertion part 502aa. The outer diameter of the second slip-off prevention part 408 is made larger than the diameter of the second insertion part 502aa.

As described above, the male screw member 403 can be rotatably held by the mount portion 502a which is one end portion of the retaining member 502. The male screw member 403 held by the mount portion 502a cannot pass the through part 401b.

The first bent portion 502b is bent at approximately right angle relative to the mount portion 502a which is one end portion of the retaining member 502.

The slide part 502c is a portion extending from the first bent portion 502b. A dimension of the slide part 502c is made smaller than that of the through part 401b. The slide part 502c penetrates the through part 401b. In other words, the retaining member 502 penetrates the through part 401b. The slide part 502c is configured to slide in the through part 401b. The slide part 502c also extends in the axial direction of the male screw member 403. Simply put, the retaining member 502 is configured to slide in the axial direction of the male screw member 403 by utilizing the through part 401b. A length of the slide part 502c is made larger than a length of a portion of the male screw shaft part 403b projecting from the mount portion 502a.

The broad portion 502d is provided at the other end portion of the slide part 502c positioned on the side opposite to the first bent portion 502b, and is located on a straight line connecting the first bent portion 502b to the slide part 502c. In other words, the broad portion 502d is a rigid body integrally formed with the retaining member 502. The broad portion 502d has a width larger than the width of the slide part 452c. A longitudinal width of the broad portion 502d is set larger than a longitudinal width of the through part 401b. Therefore, the broad portion 502d cannot pass the through part 401b and prevents the retaining member 502 from being detached from the first member 401.

As shown in Fig. 32(A), while the slide part 502c of the retaining member 502 is guided along the axial direction of the male screw member 403 by utilizing the through part 401b of the first member 401, the male screw member 403 is screwed forward to be fastened to the female screw member 405 provided on the second member 410, to thereby fix the first member 401 to the second member 410. In a state where the male screw member 403 and the female screw member 405 are fastened, the mount portion 502a is brought into substantially close contact with the first member 401. In this state, from among the portions of the retaining member 502, only the mount portion 502a, the first bent portion 502b and a portion of the slide part 502c are exposed on the outer side of the first member 401. To put it another way, in this state, a portion of the slide part 502c and the broad portion 502d are hidden on the inner side of the first member 401 and are hard to be seen from outside. Accordingly, the outer appearance of the first member 401 can be made excellent.

As shown in Fig. 32(B), when the first member 401 and the second member 410 are to be removed from each other, while the slide part 502c of the retaining member 502 is guided along the axial direction of the male screw member 403 by utilizing the through part 401b of the first member 401, the male screw member 403 is screwed backward to release the fastening with the female screw member 405 provided on the second member 410, and is pulled out from the third insertion part 410a and the first insertion part 401a. During this action, since the broad portion 502d cannot pass the through part 401b, the retaining member 502 is not detached from the first member 401. Accordingly, the male screw member 403 held by the retaining member 502 is not detached from the first member 401. Therefore, the male screw member 403 can be suitably prevented from being lost when the first member 401 is removed from the second member 410.

### [Fourth mode]

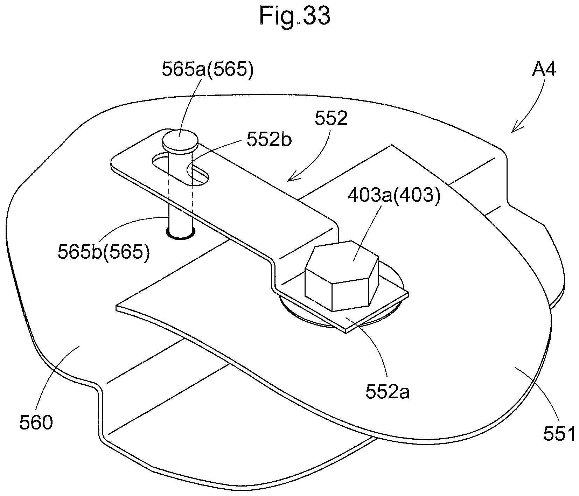

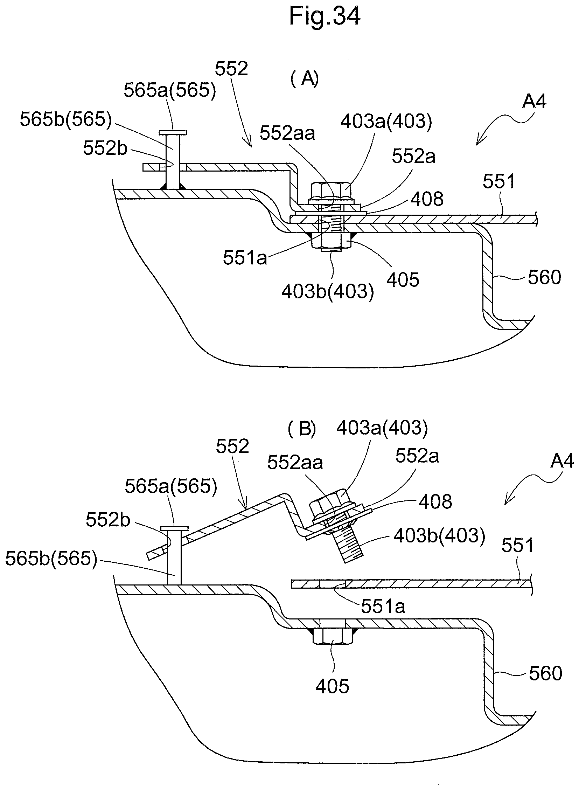

Hereinbelow, a fourth mode of the present invention will be described. A fastening structure A4 of the fourth mode shown in Figs. 33 and 34 is different from the fastening structure A1 of the first mode in that the retaining member 402, the first member 401 and the second member 410 in the fastening structure A1 are replaced with a retaining member 552, a first member 551 and a second member 560, respectively. The arrangement of the fastening structure A4 is the same as that of the fastening structure A1, except for the matters that will be described below.

The fastening structure A4 includes: the retaining member 552; the male screw member 403; a first insertion part 551a formed in the first member 551; the female screw member 405; a through part 552b formed in the retaining member 552; an enlarged diameter part 565a (one example of "first slip-off prevention part") of a guide member 565; and the second slip-off prevention part 408.

The retaining member 552 is a rigid body formed of a single flat plate. The retaining member 552 includes: a mount portion 552a positioned at one end portion of the retaining member 552; and the through part 552b which is a bore positioned at the other end portion of the retaining member 552. The mount portion 552a of the retaining member 552 has a second insertion part 552aa into which the male screw shaft part 403b is inserted. A diameter of the second insertion part 552aa is made larger than the nominal diameter of the male screw shaft part 403b.

The first insertion part 551a is formed in the first member 551. The first member 551 may not have a through part.

The guide member 565 is formed of, for example, a headed pin or the like. The guide member 565 includes: the enlarged diameter part 565a; and a guide shaft part 565b. The guide member 565 is supported by inserting the guide shaft part 565b into the through part 552b of the retaining member 552 and fixing one end portion of the guide shaft part 565b to an outer face of the second member 560 by welding or the like. In other words, the guide member 565 penetrates the through part 552b of the retaining member 552. The dimension of the guide shaft part 565b is made smaller than that of the through part 552b. The dimension of the enlarged diameter part 565a is made larger than that of the guide shaft part 565b, and larger than that of the through part 552b.

The enlarged diameter part 565a is provided at the other end portion of the guide member 565 which is positioned on the side opposite to the second member 560 relative to the through part 552b. The enlarged diameter part 565a cannot pass the through part 552b and prevents the retaining member 552 from being detached from the second member 560. To put it another way, the retaining member 552 is placed between the outer face of the second member 560 and the enlarged diameter part 565a, and is prevented from being detached from the guide shaft part 565b.

As shown in Fig. 34(A), while the through part 552b of the retaining member 552 is guided along the axial direction of the male screw member 403 by utilizing the guide shaft part 565b of the guide member 565, the male screw member 403 is screwed forward to be fastened to the female screw member 405, to thereby fix the first member 551 to the second member 560. In a state where the male screw member 403 and the female screw member 405 are fastened, the mount portion 552a is brought into substantially close contact with an outer face of the first member 551.

As shown in Fig. 34(B), when the first member 551 and the second member 560 are to be removed from each other, while the through part 552b of the retaining member 552 is guided along the axial direction of the male screw member 403 by utilizing the guide shaft part 565b of the guide member 565, the male screw member 403 is screwed backward to release the fastening with the female screw member 405 provided on the second member 560, and is pulled out from a third insertion part 561a and the first insertion part 551a. During this action, since the enlarged diameter part 565a cannot pass the through part 552b, the retaining member 552 is not detached from the first member 551. Accordingly, the male screw member 403 held by the retaining member 552 is not detached from the second member 560. Therefore, the male screw member 403 can be suitably prevented from being lost when the first member 551 is removed from the second member 560.

Such a fastening structure A4 is suitably used when it is desirable to retain the male screw member 403 on the second member 560 without detaching the male screw member 403.

### [Fifth mode]

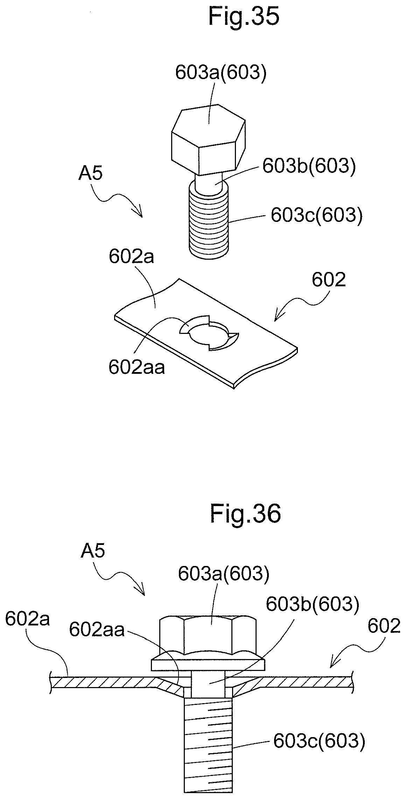

Hereinbelow, a fifth mode of the present invention will be described. A fastening structure A5 of the fifth mode shown in Figs. 35 and 36 is different from the fastening structures A1 - A4 of the first - fourth modes in that the male screw member 403, the mount portion of the retaining member and the second insertion part together with the second slip-off prevention part 408 in the first - fourth modes are replaced with a male screw member 603, a mount portion 602a of a retaining member 602, and a slip-off prevention hole 602aa of the retaining member 602, respectively.

Referring to Figs. 35 and 36, the male screw member 603 in the fastening structure A5 includes: a head 603a; an insertion shaft part 603b extending from the head 603a without having a male screw; and a male screw shaft part 603c extending from the insertion shaft part 603b.

The mount portion 602a of the retaining member 602 has the slip-off prevention hole 602aa. The slip-off prevention hole 602aa has a large diameter portion and a small diameter portion. A diameter of the large diameter portion is made larger than an outer diameter of the male screw shaft part 603c. A diameter of the small diameter portion is made smaller than the outer diameter of the male screw shaft part 603c and larger than a diameter of the insertion shaft part 603b.

As shown in Fig. 36, the male screw shaft part 603c of the male screw member 603 is screwed into the slip-off prevention hole 602aa of the retaining member 602, up to the insertion shaft part 603b. With this action, the insertion shaft part 603b can be positioned between the head 603a and the male screw shaft part 603c of the male screw member 603. In other words, the male screw member 603 is prevented from being detached from the retaining member 602.

### [Other modes]

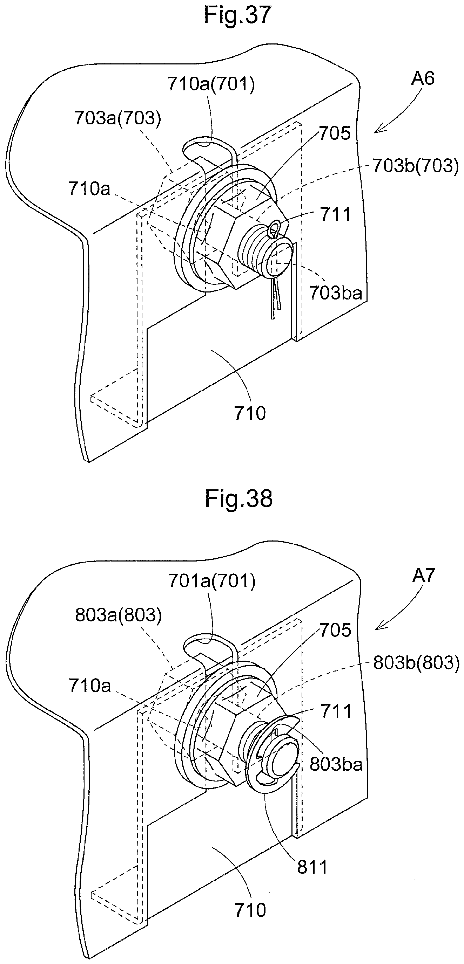

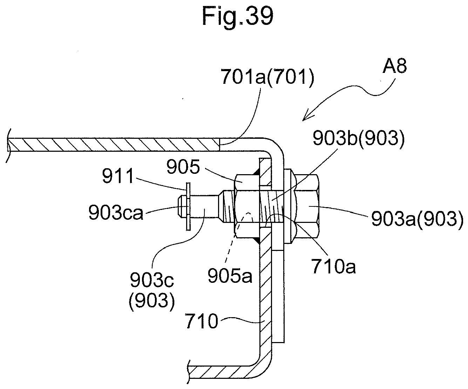

(1) Hereinbelow, a fastening structure A6 will be described. The arrangement of the fastening structure A6 shown in Fig. 37 is the same as that of the fastening structure A1, except for the matters that will be described below.
   As shown in Fig. 37, in the fastening structure A6, a first member 701 includes a cutout 701a in a U-shape with end portion thereof being opened. In addition, a male screw member 703 of the fastening structure A6 includes: a head 703a; a male screw shaft part 703b extending from the head 703a; and a bore 703ba formed in a distal end portion of the male screw shaft part 703b. A second member 710 has a third insertion part 710a in a shape of a round hole into which the male screw shaft part 703b of the male screw member 703 is inserted. While the male screw shaft part 703b is inserted into the third insertion part 710a, the head 703a of the male screw member 703 is fixed to the second member 710 by welding or the like. In this state, a rotatable female screw member 705 is screwed onto the male screw member 703, and a split cotter pin 711 is inserted into the bore 703ba. In the fastening structure A6, the first member 701 can be fixed between the second member 710 and the female screw member 705.
   As shown in Fig. 37, in a state where the female screw member 705 and the male screw member 703 are fastened, the first member 701 is fixed to the second member 710 by sandwiching and pressing the first member 701 between the second member 710 and the female screw member 705. When the female screw member 705 is screwed backward from the male screw member 703 to release the fastening of the female screw member 705 and the male screw member 703, the cutout 701a of the first member 701 can be slid to allow the first member 701 and the second member 710 to be removed from each other. During this action, since the split cotter pin 711 is inserted into the bore 703ba, the female screw member 705 is not detached from the male screw member 703. Therefore, when the first member 701 and the second member 710 are removed from each other, the male screw member 703 and the female screw member 705 are not detached from the second member 710.
(2) Hereinbelow, a fastening structure A7 will be described. The fastening structure A7 shown in Fig. 38 is different from the fastening structure A6 in that the male screw member 703 and the split cotter pin 711 in the fastening structure A6 are replaced with a male screw member 803 and an E-type retaining ring 811, respectively. The arrangement of the fastening structure A7 is the same as that of the fastening structure A6, except for the matters that will be described below.
   As shown in Fig. 38, the male screw member 803 in the fastening structure A7 includes: a head 803a; a male screw shaft part 803b extending from the head 803a; and a groove 803ba formed in a distal end portion of the male screw shaft part 803b. While the male screw shaft part 803b is inserted into the third insertion part 710a, the head 803a of the male screw member 803 is fixed to the second member 710 by welding or the like. In this state, the rotatable female screw member 705 is screwed onto the male screw member 803, and the retaining ring 811 is fixed to the groove 803ba. In the fastening structure A7, the first member 701 can be fixed between the second member 710 and the female screw member 705.
   As shown in Fig. 38, in a state where the female screw member 705 and the male screw member 803 are fastened, the first member 701 is fixed to the second member 710 by sandwiching and pressing the first member 701 between the second member 710 and the female screw member 705. When the female screw member 705 is screwed backward from the male screw member 803 to release the fastening of the female screw member 705 and the male screw member 803, the cutout 701a of the first member 701 can be slid to allow the first member 701 and the second member 710 to be removed from each other. During this action, since the retaining ring 811 is fixed to the groove 803ba, the female screw member 705 is not detached from the male screw member 803. Therefore, when the first member 701 and the second member 710 are removed from each other, the male screw member 803 and the female screw member 705 are not detached from the second member 710.
(3) Hereinbelow, a fastening structure A8 will be described. The fastening structure A8 shown in Fig. 39 is different from the fastening structure A7 in that the male screw member 803, the female screw member 705 and the retaining ring 811 in the fastening structure A7 are replaced with a male screw member 903, a female screw member 905 and a retaining ring 911. The arrangement of the fastening structure A8 is the same as that of the fastening structure A7, except for the matters that will be described below.
   As shown in Fig. 39, the male screw member 903 in the fastening structure A8 includes: a head 903a; a male screw shaft part 903b extending from the head 903a; a small-diameter shaft part 903c extending from the male screw shaft part 903b; and a groove 903ca formed in a distal end portion of the small-diameter shaft part 903c. The female screw member 905 is fixed to an inner face of the second member 710 by welding or the like. The female screw member 905 has a female screw hole 905a. An outer diameter of the small-diameter shaft part 903c is made smaller than a diameter of the male screw shaft part 903b and smaller than an inner diameter of the female screw hole 905a of the female screw member 905. In addition, a length in an axial direction of the small-diameter shaft part 903c is made larger than a length in an axial direction of the female screw member 905.
   The small-diameter shaft part 903c and the male screw shaft part 903b of the male screw member 903 are inserted into the cutout 701a of the first member 701, the third insertion part 710a of the second member 710 and the female screw hole 905a of the female screw member 905, while the male screw shaft part 903b is screwed forward into the female screw hole 905a of the female screw member 905. Then, the retaining ring 911 is fixed onto the groove 903ca formed in the distal end portion of the small-diameter shaft part 903c.
   With this fastening structure A8, when the first member 701 and the second member 710 are to be fixed, the fixing can be achieved by rotating the head 903a of the male screw member 903 to screw forward the male screw member 903 into the female screw member 905, and thus to sandwich and fixed the first member 701 and the second member 710 between the male screw member 903 and the female screw member 905.
   When the fastening of the male screw member 903 and the female screw member 905 are to be released, the first member 701 is removed from the second member 710, and the second member 710 is not detached from the male screw member 903.
   In addition, with this fastening structure A8, even when the head 903a and the male screw member 903 are turned by, for example, an electric tool, such as impact wrench, the small-diameter shaft part 903c and the female screw member 905 idles relative to each other. Therefore, the retaining ring 911 fixed to the groove 903ca formed in the distal end portion of the male screw member 903 is never damaged by the female screw member 905.
   It is noted that the distal end portion of the male screw member 903 may be provided with a bore, and instead of the retaining ring 911, a split cotter pin may be inserted and fixed.
(4) In each of the above-mentioned modes, the pulley 376 or the belt 377 is shown as an example of the "rolling body", but the rolling body is not limited to these. For instance, the "rolling body" may be a chain, a gear, or the like.
(5) In each of the above-mentioned modes, the cover member C is taken as the "first member" and the covered member U is taken as the "second member", but the covered member U may be taken as the "first member" and the cover member C may be taken as the "second member".
(6) For the above-mentioned modes, the respective fastening structures A1 - A7 are individually explained, but various combinations of the fastening structures A1 - A7 may be provided on the "first member" and the "second member".
(7) In each of the above-mentioned modes, the riding type mower of a mid-mount type is illustrated as the mower to which the fastening structure is introduced, but the mower is not limited to this type. The fastening structure may be provided in, for instance, other types of riding type mower, including those of a front mount type and a rear mount type.

## Claims

1. A mower unit (120) comprising:
a blade unit (170) including: a rotary shaft (171a, 173a) having a rotary axis (171, 173) extending in a vertical direction; and a blade (172, 174) which is provided on the rotary shaft (171a, 173a) and rotatable about the rotary axis (171, 173);
a blade housing (121) including a top panel (121a) and a side plate (121b) extending downward from a peripheral edge of the top panel (121a), for covering the blade unit (170) from above to create a mowing space (108) therein;
a mown grass discharge port (129) formed in the top panel (121a) for discharging conveying air flow generated by rotation of the blade; and
an intake part (102) that supplies ambient air to the conveying air,
**characterized in that**
the intake part (102) includes an ambient air intake opening (102a; 102b; 102c) formed in the mown grass discharge port (129) or in the vicinity thereof, and an auxiliary ambient air intake opening (121s; 121e; 121f; 121g) formed in the top panel (121a) or the side plate (121b), and that the mower unit (120) further comprises
a cover (200; 201; 202; 203; 125a) that covers the auxiliary ambient air intake opening (121s; 121e; 121f; 121g).

2. The mower unit (120) according to claim 1, wherein the auxiliary ambient air intake opening (121s) is formed in a region of the side plate (121b) adjacent to the top panel (121a).

3. The mower unit (120) according to claim 1, wherein the auxiliary ambient air intake opening (121e) is formed in a front-side, lower end region of the side plate (121b).

4. The mower unit (120) according to claim 1, wherein the auxiliary ambient air intake opening (121f) is formed in a rear-side, lower end region of the side plate (121b).

5. The mower unit (120) according to claim 1, wherein the auxiliary ambient air intake opening (121g) is formed in the top panel (121a).

## Patentansprüche

1. Eine Mäheinheit (120) umfassend:
eine Messereinheit (170) enthaltend: eine Drehwelle (171a, 173a) mit einer Drehachse (171, 173), die sich in einer vertikalen Richtung erstreckt; und ein Messer (172, 174), das auf der Drehwelle (171a, 173a) bereitgestellt und um die Drehachse (171, 173) drehbar ist;
ein Messergehäuse (121) mit einer oberen Platte (121a) und einer Seitenplatte (121b), die sich von einer Umfangskante der oberen Platte (121a) nach unten erstreckt, um die Messereinheit (170) von oben abzudecken, um darin einen Mähraum (108) zu schaffen;
eine in der oberen Platte (121a) ausgebildete Mähgrasauslassöffnung (129) zum Auslassen des durch die Rotation des Messers erzeugten Förderluftstroms; und
ein Ansaugteil (102), das der Förderluft Umgebungsluft zuführt,
**dadurch gekennzeichnet, dass**
das Ansaugteil (102) eine Umgebungslufteinlassöffnung (102a; 102b; 102c), die in der Mähgrasauslassöffnung (129) oder in der Nähe davon ausgebildet ist, und eine Hilfsumgebungslufteinlassöffnung (121s; 121e; 121f; 121g), die in der oberen Platte (121a) oder der Seitenplatte (121b) ausgebildet ist, umfasst, und dass die Mäheinheit (120) ferner umfasst eine Abdeckung (200; 201; 202; 203; 125a), die die Hilfsumgebungslufteinlassöffnung (121s; 121e; 121f; 121g) abdeckt.

2. Mäheinheit (120) nach Anspruch 1, wobei die Hilfsumgebungslufteinlassöffnung (121s) in einem Bereich der Seitenplatte (121b) neben der oberen Platte (121a) ausgebildet ist.

3. Mäheinheit (120) nach Anspruch 1, wobei die Hilfsumgebungslufteinlassöffnung (121e) in einem vorderen, unteren Endbereich der Seitenplatte (121b) ausgebildet ist.

4. Mäheinheit (120) nach Anspruch 1, wobei die Hilfsumgebungslufteinlassöffnung (121f) in einem rückseitigen, unteren Endbereich der Seitenplatte (121b) ausgebildet ist.

5. Mäheinheit (120) nach Anspruch 1, wobei die Hilfsumgebungslufteinlassöffnung (121g) in der oberen Platte (121a) ausgebildet ist.

## Revendications

1. Tondeuse (120) comprenant :
une unité de lame (170) comportant : un arbre rotatif (171a, 173a) dont l'axe de rotation (171, 173) s'étend en direction verticale ; et une lame (172, 174) qui est prévue sur ledit arbre rotatif (171a, 173a) et apte à tourner autour ledit axe de rotation (171, 173) ;
un boîtier de lame (121) comportant un panneau supérieur (121a) une plaque latérale (121b) s'étendant vers le bas depuis un bord périphérique dudit panneau supérieur (121a), pour couvrir ladite unité de lame (170) par le dessus afin de générer une espace de tonte (108) dans ceux-ci ;
une ouverture de déchargement (129) d'herbe tondue formée dans ledit panneau supérieur (121a) pour décharger le courant d'air de transport généré par la rotation de la lame ; et
une partie d'entrée (102) qui est destinée à amener de l'air ambiant à l'air de transport,
**caractérisée en ce que**
ladite partie d'entrée (102) comporte une ouverture d'entrée (102a; 102b; 102c) d'air ambiant formée dans ladite ouverture de déchargement (129) d'herbe tondue ou à proximité de celle-ci, et une ouverture auxiliaire d'entrée (121s; 121e; 121f; 121g) d'air ambiant formée dans ledit panneau supérieur (121a) ou ladite plaque latérale (121b), et **en ce que** ladite tondeuse (120) comprend en outre
un couvercle (200; 201; 202; 203; 125a) qui couvre ladite ouverture auxiliaire d'entrée (121s; 121e; 121f; 121g) d'air ambiant.

2. Tondeuse (120) selon la revendication 1, dans laquelle ladite ouverture auxiliaire d'entrée (121s) d'air ambiant est formée dans une région de ladite plaque latérale (121b) qui est adjacente audit panneau supérieur (121a).

3. Tondeuse (120) selon la revendication 1, dans laquelle ladite ouverture auxiliaire d'entrée (121e) d'air ambiant est formée dans une région de ladite plaque latérale (121b) qui est située sur la face avant et à l'extrémité inférieure de celle-ci.

4. Tondeuse (120) selon la revendication 1, dans laquelle ladite ouverture auxiliaire d'entrée (121 f) d'air ambiant est formée dans une région de ladite plaque latérale (121b) qui est située sur la face arrière et à l'extrémité inférieure de celle-ci.

5. Tondeuse (120) selon la revendication 1, dans laquelle ladite ouverture auxiliaire d'entrée (121g) d'air ambiant est formée dans ledit panneau supérieur (121a).
